# EUROPEAN PATENT APPLICATION

(11) **EP 3 736 684 A1**
(43) Date of publication of application: **11.11.2020**
(21) Application number: 19756613.6
(22) Date of filing: 30.01.2019
(51) Int. Cl.: G06F 3/16, G06F 21/32, G10L 15/02, H04L 12/18

(54) **METHOD AND SYSTEM FOR PERFORMING VOICE COMMAND**

(30) Priority: 26.02.2018 KR 20180022969
(71) Applicant: Samsung Electronics Co., Ltd., Gyeonggi-do 16677 (KR)
(72) Inventor: PYUN, Dohyun, Suwon-Si, Gyeonggi-do 16677 (KR)
(74) Representative: HGF
(86) International application number: PCT/KR2019/001292
(87) International publication number: WO 2019/164148

(57) **Abstract**

Provided is a method, performed by a first device, of performing a voice command. For example, a method, performed by a first device, of performing a voice command includes receiving a packet including voice data of a user broadcast from a second device; performing authentication of the user, by using the voice data included in the packet; detecting a control command from the voice data, when the authentication of the user succeeds; and performing a control operation corresponding to the control command.

## Description

### TECHNICAL FIELD

Provided are a method of performing an external broadcast voice command and a system for controlling a plurality of devices.

### BACKGROUND ART

Mobile terminals may be configured to perform various functions. Examples of the various functions include a data and voice communication function, a function of photo or video capture through a camera, a voice storage function, a function of music file playback through a speaker system, and an image or video display function.

Some mobile terminals include an additional function for playing games, and some other mobile terminals are implemented as multimedia devices. Also, mobile terminals provide a remote control function for remotely controlling other devices. However, because a control interface varies according to the device, it is inconvenient for a user to control other devices through a mobile terminal.

### DESCRIPTION OF EMBODIMENTS

### BRIEF DESCRIPTION OF DRAWINGS

FIG. 1A is a view for describing a general device control system.
FIG. 1B is a view for briefly describing a device control system through a voice command according to an embodiment.
FIG. 2 is a block diagram for describing a device control system according to an embodiment.
FIG. 3 is a diagram for describing a method in which a first device performs a voice command, according to an embodiment.
FIG. 4 is a diagram for describing a packet including voice data according to an embodiment.
FIG. 5 is a flowchart for describing a method in which a first device performs authentication of a user, according to an embodiment.
FIG. 6 is a flowchart for describing a method in which a first device performs a voice command in association with a service device, according to an embodiment.
FIG. 7 is a flowchart for describing a method in which a first device performs a voice command in association with a server device according to another embodiment.
FIG. 8 is a diagram for describing a first voice recognition model of a first device and a second voice recognition model of a server device, according to an embodiment.
FIG. 9 is a flowchart for describing a method in which a first device performs a voice command, according to an embodiment.
FIG. 10 is a flowchart for describing a method in which a first device performs a voice command according to an operation mode, according to an embodiment.
FIG. 11 is a flowchart for describing a method of identifying an operation mode of a first device based on connection state information between the first device and a server device, according to an embodiment.
FIG. 12 is a flowchart for describing a method in which a first device identifies an operation mode of the first device based on information included in a packet, according to an embodiment.
FIG. 13 is a flowchart for describing a method in which a first device switches an operation mode, according to an embodiment.
FIG. 14 is a diagram for describing an operation in which each of a plurality of devices performs a voice command, according to an embodiment.
FIG. 15 is a block diagram for describing a configuration of a first device (command execution device) according to an embodiment.
FIG. 16 is a block diagram for describing a configuration of a second device (command input device) according to an embodiment.
FIG. 17 is a block diagram for describing a configuration of a server device according to an embodiment.

### MODE OF DISCLOSURE

According to an embodiment, a method and system in which a first device performs a voice command of a user input by a second device, without a communication connection process between the first device and the second device may be provided.

A method, performed by a first device, of performing a voice command according to an embodiment may include receiving a packet including voice data of a user broadcast from a second device; performing authentication of the user, by using the voice data included in the packet; detecting a control command from the voice data, when the authentication of the user succeeds; and performing a control operation corresponding to the control command.

A first device according to an embodiment may include a communicator configured to receive a packet including voice data of a user broadcast from a second device; and a processor configured to perform authentication of the user by using the voice data included in the packet, detect a control command from the voice data when the authentication of the user succeeds, and perform a control operation corresponding to the control command.

In a computer program product including a computer-readable storage medium according to an embodiment, the computer-readable storage medium may include instructions to receive a packet including voice data of a user broadcast from the outside; perform authentication of the user, by using the voice data included in the packet; detect a control command from the voice data, when the authentication of the user succeeds; and perform a control operation corresponding to the control command.

A method, performed by a first device, of performing a voice command according to an embodiment may include receiving a packet including voice data of a user broadcast from a second device; transmitting the voice data to a server device; receiving, from the server device, a result of authentication of the user based on the voice data and information about a control command detected from the voice data; and performing a control operation corresponding to the control command, when the authentication of the user succeeds.

A first device according to an embodiment may include a first communicator configured to receive a packet including voice data of a user broadcast from a second device; a second communicator configured to transmit the voice data to a server device and receive, from the server device, a result of authentication of the user based on the voice data and information about a control command detected from the voice data; and a processor configured to perform a control operation corresponding to the control command, when the authentication of the user succeeds.

In a computer program product including a computer-readable storage medium according to an embodiment, the computer-readable storage medium may include instructions to receive a packet including voice data of a user broadcast from the outside; transmit the voice data to a server device; receive, from the server device, a result of authentication of the user based on the voice data and information about a control command detected from the voice data; and perform a control operation corresponding to the control command, when the authentication of the user succeeds.

The terms used in the present disclosure are briefly described and the embodiments of the disclosure are described in detail.

Although the terms used herein are selected from among common terms that are currently widely used in consideration of their functions in the disclosure, the terms may vary according the intention of one of ordinary skill in the art, a precedent, or the advent of new technology. Also, in particular cases, the terms are discretionally selected by the applicant of the disclosure, and the meaning of those terms will be described in detail in the corresponding part of the detailed description. Therefore, the terms used herein are not merely designations of the terms, but the terms are defined based on the meaning of the terms and content throughout the disclosure.

Throughout the present application, when a part "includes" an element, it is to be understood that the part additionally includes other elements rather than excluding other elements as long as there is no particular opposing recitation. Also, the terms such as "... unit," "module," or the like used in the disclosure indicate a unit, which processes at least one function or motion, and the unit may be implemented as hardware or software, or a combination of hardware and software.

Hereinafter, embodiments of the disclosure will be described in detail with reference to the attached drawings in order to enable one of ordinary skill in the art to easily embody and practice the disclosure. The disclosure may, however, be embodied in many different forms and should not be construed as being limited to the embodiments of the disclosure set forth herein. Also, parts in the drawings unrelated to the detailed description are omitted to ensure clarity of the present disclosure, and like reference numerals in the drawings denote like elements.

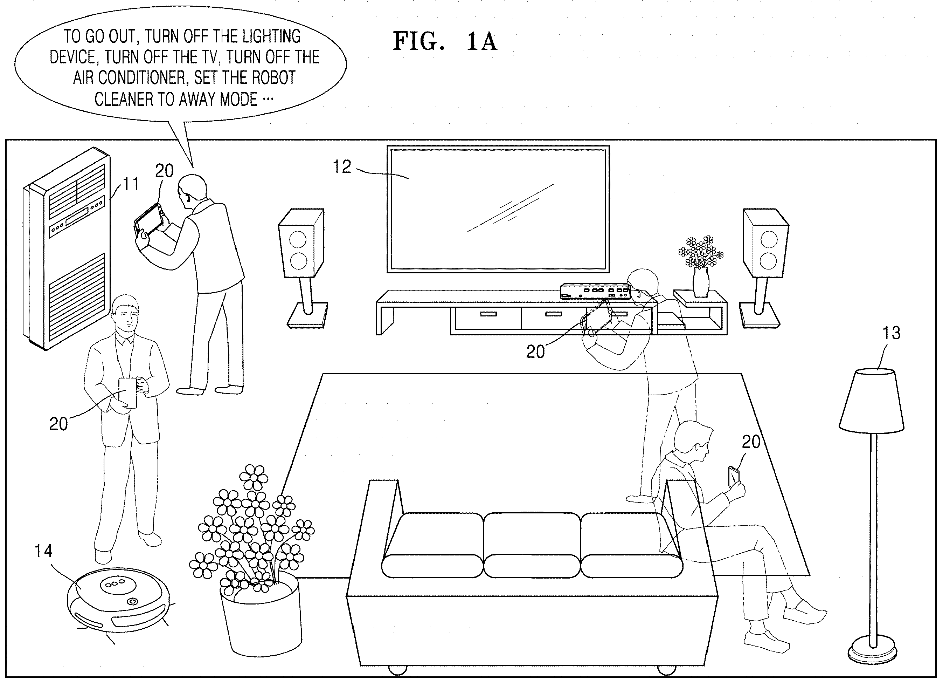

FIG. 1A is a view for describing a general device control system.

In general, in a system for controlling a plurality of devices, a user may control the plurality of devices one by one by using a user terminal 20 (e.g., a mobile phone). In this case, the user terminal 20 has to perform a procedure of establishing a communication connection with each of the plurality of devices in advance. For example, when the user is to go out, the user may turn off an air conditioner 11, may turn off a TV 12, may turn off a lighting device 13, and may set an operation mode of a robot cleaner 14 to an away mode, by using the user terminal 20 (e.g., a mobile phone). However, in order for the user terminal 20 to control the air conditioner 11, the TV 12, the lighting device 13, and the robot cleaner 14, the user terminal 20 has to create a channel with each of the air conditioner 11, the TV 12, the lighting device 13, and the robot cleaner 14 in advance.

That is, in general, in order for the user terminal 20 to control a plurality of devices, as many connected channels as the devices to be controlled are required. Also, in order to create a channel, a device search process, an authentication process, and a connection process are required. Accordingly, when the number of devices to be controlled increases, a time taken to create channels may be longer than a time taken to actually transmit data.

In a method of controlling a plurality of devices by using Bluetooth (e.g., Basic Rate/Enhanced Data Rate (BR/EDR)), a maximum number of devices that may be simultaneously connected is set to 7 (e.g., one master and seven slaves). Accordingly, there is a technical limitation in that the user terminal 20 may not send a command after simultaneously connected to 7 or more devices.

Accordingly, a system in which the user terminal 200 may control a plurality of devices without a process of creating communication channels with the plurality of devices is required. Hereinafter, a system in which a first device (command execution device) performs a voice command of a user input to a second device (command input device) without a communication connection process between the first device and the second device will be described in detail. The term "voice command" used herein may refer to a control command input through a user's voice.

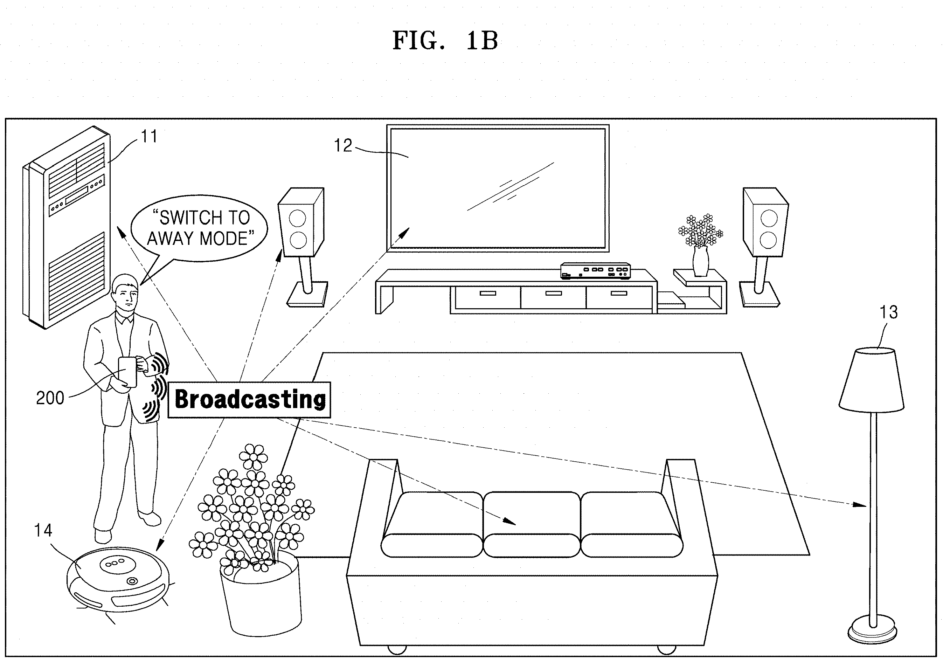

FIG. 1B is a view for briefly describing a device control system through a voice command according to an embodiment.

Referring to FIG. 1B, when a user inputs a voice command (e.g., "switch to away mode") to a second device (command input device) 200, the second device 200 may broadcast a packet including the voice command. In this case, a plurality of devices (e.g., the air conditioner 11, the TV 12, the lighting device 13, and the robot cleaner 14) within a certain distance from the second device 200 may receive the packet including the voice command. Each of the plurality of devices (e.g., the air conditioner 11, the TV 12, the lighting device 13, and the robot cleaner 14) receiving the packet may perform an operation corresponding to the voice command, by analyzing the voice command directly or through a server device.

Accordingly, according to an embodiment, the user may control the plurality of devices at a time through the second device 200 to which a voice may be input, without controlling the plurality of devices one by one. Also, because a process in which the second device 200 establishes a communication connection with the plurality of devices is not required, unnecessary time taken to create channels may be reduced. The technical constraint that the number of devices to be controlled is limited when specific communication technology (e.g., Bluetooth) is used may be reduced.

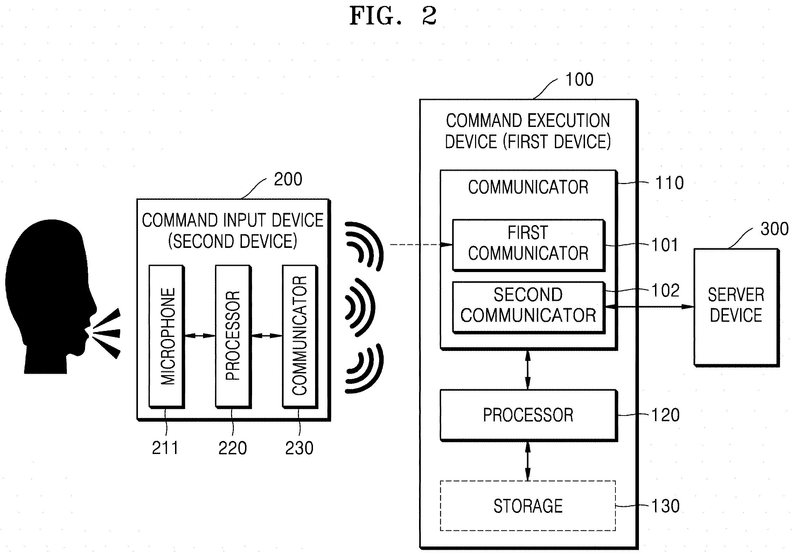

A system in which a first device performs a voice command of a user input to a second device according to an embodiment will now be described in more detail with reference to FIG. 2.

FIG. 2 is a block diagram for describing a device control system according to an embodiment.

Referring to FIG. 2, a device control system according to an embodiment may include a command execution device (hereinafter, referred to as a first device 100), a command input device (hereinafter, referred to as a second device 200), and a server device 300. However, not all elements illustrated in FIG. 2 are essential elements. The device control system may include more or fewer elements than those illustrated in FIG. 2. For example, the device control system may include only the first device 100 and the second device 200 without the server device 300. Each element will now be described.

The second device (command input device) 200 may be a device for receiving, from a user, a voice for controlling an external device (e.g., the first device 100). For example, the second device 200 may detect the voice of the user through a microphone 211. Also, the second device 200 may further include a processor 220 and a communicator 230. The processor 220 of the second device 200 may insert data (hereinafter, referred to as voice data) related to the voice received through the microphone 211 into a packet according to a pre-defined data format. Also, the communicator 230 of the second device 200 may broadcast the packet including the voice data (e.g., a voice command) to the outside.

According to an embodiment, the second device 200 may broadcast the packet through short-range communication. For example, the second device 200 may broadcast the packet including the voice data, by using at least one of, but not limited to, wireless LAN (Wi-Fi), 3^{rd} Generation (3G), 4^{th} Generation (4G), Long-term Evolution (LTE), Bluetooth, Zigbee, Wi-Fi Direct (WFD), Ultra-wideband (UWB), Infrared Data Association (IrDA), Bluetooth Low Energy (BLE), Near-field communication (NFC), Sound communication, and Ant+.

The second device 200 according to an embodiment may be implemented in various forms. Examples of the second device 200 may include, but are not limited, a digital camera, a smartphone, a laptop computer, a tablet PC, an electronic book terminal, a digital broadcasting terminal, a personal digital assistant (PDA), a portable multimedia payer (PMP), a navigation device, and an MP3 player.

The second device 200 may be a wearable device that may be worn on the user. For example, the second device 200 may include at least one of, but not limited to, an accessory-type device (e.g., a watch, a ring, a bracelet, an anklet, a necklace, glasses, or contact lenses), a head-mounted device (HMD), a fabric or clothing-integrated device (e.g., electronic clothing), a body-attachable device (e.g., a skin pad), and a bio-implantable device (e.g., an implantable circuit). However, for convenience of explanation, the following will be described assuming that the second device 200 is a mobile terminal.

The first device (command execution device) 100 may be a device for receiving the packet including the voice data (e.g., the voice command) broadcast from the outside and performing a control operation corresponding to the voice command. Examples of the first device 100 may include, but are not limited to, a display device (e.g., a TV), a smartphone, a laptop computer, a tablet PC, an electronic book terminal, a digital broadcasting terminal, a personal digital assistant (PDA), a portable multimedia player (PMP), a navigation system, an MP3 player, a consumer electronic device (e.g., a lighting device, a refrigerator, an air conditioner, a water purifier, a dehumidifier, a humidifier, a coffee machine, an oven, a robot cleaner, or a scale), a wearable device (e.g., a band, a watch, glasses, a virtual reality (VR), shoes, a belt, gloves, a ring, or a necklace), and any of various sensors (e.g., a temperature sensor, a humidity sensor, a dust sensor, or a glucose sensor).

According to an embodiment, the first device 100 may include a communicator 110 and a processor 120. In this case, the communicator 110 may include, but is not limited to, a first communicator 101 for receiving the packet broadcast from the second device 200 and a second communicator 102 for transmitting/receiving data to/from the server device 300. Also, the first device 100 may further include a storage 130.

According to an embodiment, the storage 130 of the first device 100 may store a user authentication model and a voice recognition model. In this case, the first device 100 may provide a user authentication function and a voice recognition function based on the voice data. According to an embodiment, the user authentication model may be a learning model for authenticating the user, based on feature information of a voice that is pre-registered by the user. For example, the user authentication model may be a model for authenticating the user based on voice pattern matching. Also, the voice recognition model may be a model for detecting (obtaining) the control command included in the voice data, by analyzing the voice data included in the packet. For example, the voice recognition model may be a model for recognizing the voice of the user by using natural language processing.

According to an embodiment, the storage 130 of the first device 100 may include only the user authentication model and may not include the voice recognition model. In this case, user authentication based on the voice data may be performed by the first device 100, and an operation of detecting the control command through voice recognition may be performed by the server device 300.

According to an embodiment, the storage 130 of the first device 100 may not include both the user authentication model and the voice recognition model. In this case, the first device 100 may request the server device 300 for information about the control command and user authentication, by transmitting the voice data to the server device 300.

The server device 300 may receive the voice data from the second device 200, and may perform user authentication or voice recognition according to the request of the second device 200. For example, the server device 300 may perform user authentication based on the voice data by using a pre-generated user authentication model. Also, when the user authentication succeeds, the server device 300 may detect an operation code indicating the control command from the voice data by using a voice recognition model, and may transmit the detected operation code to the second device 200.

According to an embodiment, the server device 300 may include an artificial intelligence (AI) processor. The AI processor may generate an AI model (e.g., a user authentication model or a voice recognition model) for determining an intensive inspection area, by training an artificial neural network. When the artificial neural network is 'trained', it may mean that a mathematical model that allows connections of neurons constituting the artificial neural network to make an optimal determination by appropriately changing weight values based on data is created.

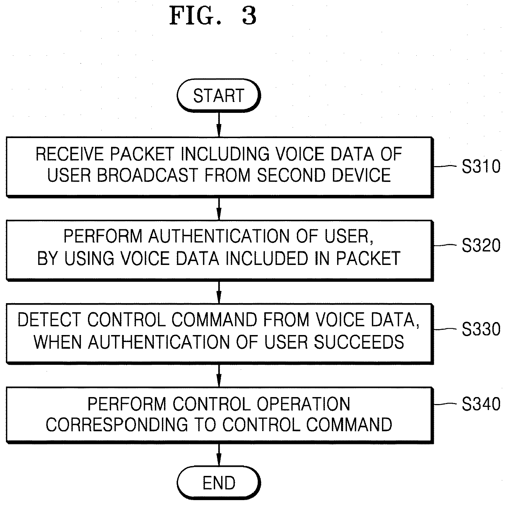

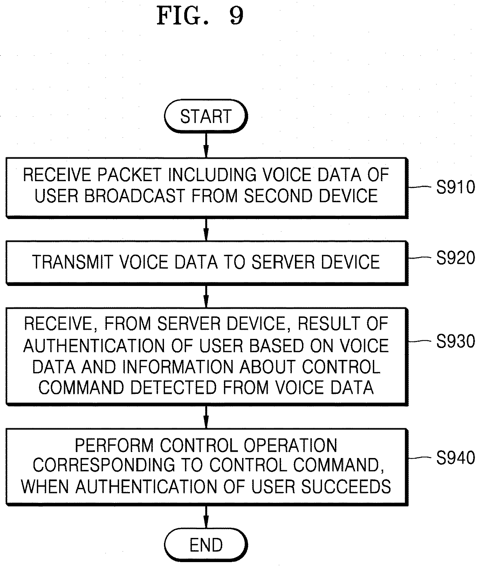

Hereinafter, an embodiment in which the first device 100 provides a voice recognition function will be first described with reference to FIGS. 3 to 8, and an embodiment in which the first device 100 does not provide a voice recognition function will be described later with reference to FIGS. 9 to 14.

FIG. 3 is a diagram for describing a method in which a first device performs a voice command according to an embodiment.

In operation S310, the first device 100 may receive a packet including voice data of a user broadcast from the second device 200. For example, the second device 200 may receive a voice command uttered by the user, and may insert the voice data including the voice command into the packet. When the second device 200 broadcasts the packet, the first device 100 located at a certain distance from the second device 200 may search the packet through short-range communication.

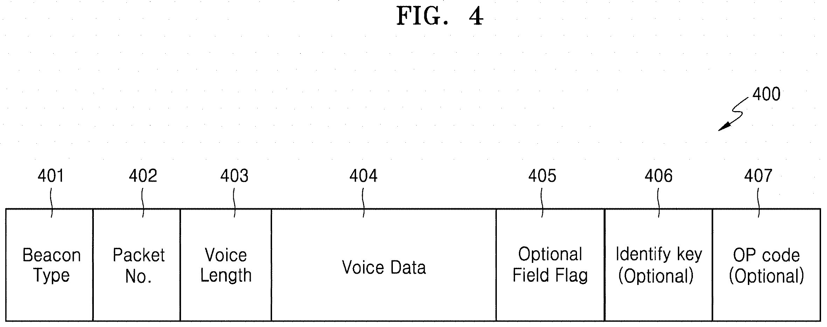

Referring to FIG. 4, a packet 400 according to an embodiment may include, but is not limited to, a first field 401 indicating a beacon type, a second field 402 indicating a packet number, a third field 403 indicating a voice length, and a fourth field 404 including the voice data. For example, the packet 400 may further include a fifth field 405 indicating an optional field flag, a sixth field 406 including an identification key, and a seventh field 407 including an operation (OP) code. When the packet 400 further includes the identification key and the operation code, the optional field flag may be displayed as 'TRUE'.

In operation S320, the first device 100 may perform authentication of the user, by using the voice data included in the packet 400.

According to an embodiment, the first device 100 may perform the authentication of the user, by using pattern matching. For example, the first device 100 may detect first voice feature information from the voice data included in the packet 400, and may compare the first voice feature information with pre-stored (or pre-registered) second voice feature information. The second voice feature information may be feature information detected from a voice pre-registered in the first device 100 for authentication of the user. The first device 100 may detect the first voice feature information from the voice data by using, but not limited to, linear predictive coefficient, cepstrum, mel-frequency cepstral coefficient (MFCC), or filter bank energy.

According to an embodiment, the first device 100 may perform the authentication of the user, based on a comparison result between the first voice feature information and the second voice feature information. For example, when a similarity between the first voice feature information and the second voice feature information is equal to or greater than a threshold value (e.g., 99%), the first device 100 may determine that the authentication of the user succeeds. In contrast, when a similarity between the first voice feature information and the second voice feature information is less than the threshold value, the first device 100 may determine that the authentication of the user fails.

According to an embodiment, the first device 100 may distinguish feature information of a voice actually uttered by the user from feature information of a recorded voice. Accordingly, when the voice data included in the packet 400 includes a recorded voice, the first device 100 may determine that the authentication of the user fails, and when the voice data included in the packet 400 includes a voice uttered by the user in real time, the first device 100 may determine that the authentication of the user succeeds.

According to an embodiment, the first device 100 may identify a personal authentication word from the voice data, and may detect the first voice feature information from the identified personal authentication word. In this case, because the first device 100 detects the first voice feature information from a short word, the amount of calculation may be reduced. Also, because the authentication of the user may succeed only when the personal authentication word is included in the voice data, security may be enhanced.

For example, when the user pre-registers 'Tinkerbell' as a personal authentication word, the second device 200 may extract second voice feature information from a voice of the user who utters 'Tinkerbell', and may store the second voice feature information. Accordingly, in order for the user to control the first device 100 later, the user has to utter a voice including 'Tinkerbell'. For example, when the user utters "Tinkerbell, cleaning mode", the second device 200 may detect a voice command ("Tinkerbell, cleaning mode") of the user, may generate a packet including the voice command according to a pre-defined format, and may broadcast the packet. In this case, the first device 100 may receive the packet including the voice command ("Tinkerbell, cleaning mode"), and may identify voice data related to 'Tinkerbell' from the packet. The first device 100 may extract first voice feature information from the voice data related to 'Tinkerbell'. The first device 100 may perform user authentication, based on a comparison result between the first voice feature information and the pre-stored second voice feature information.

Assuming that the user registers a personal authentication word, when the second device 200 detects the personal authentication word, the second device 200 may automatically generate a packet including voice data and may broadcast the packet, even without a separate input of the user.

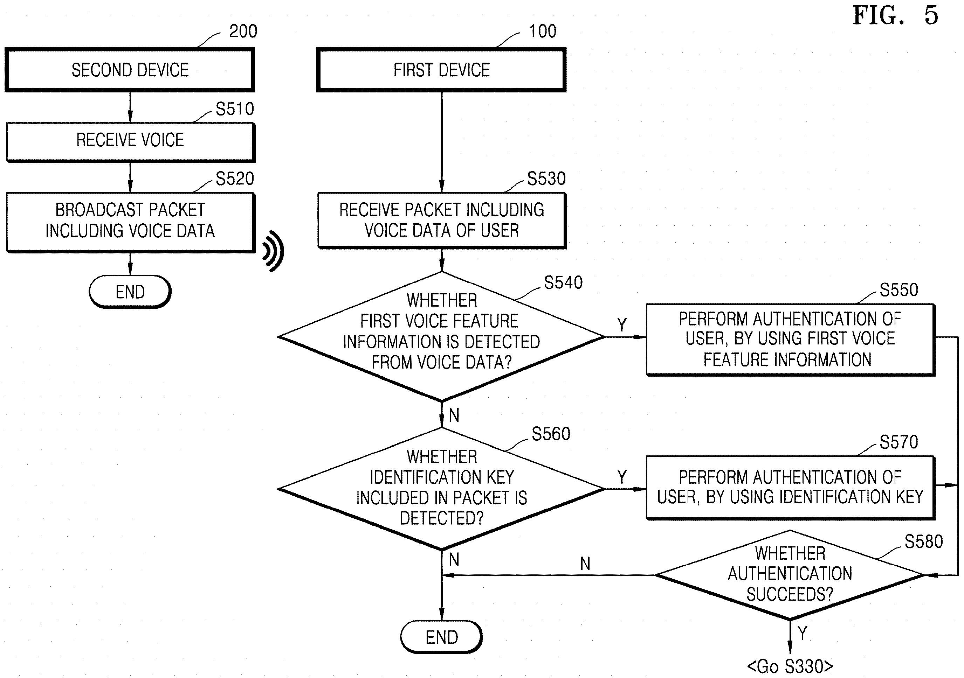

According to an embodiment, when the first device 100 fails to detect the first voice feature information from the voice data, the first device 100 may perform the authentication of the user by using the identification key. An operation in which the first device 100 performs the authentication of the user by using the identification key will be described below with reference to FIG. 5.

In operation S330, the first device 100 may detect a control command from the voice data, when the authentication of the user succeeds.

According to an embodiment, the first device 100 may generate result data obtained by analyzing the voice data based on natural language processing. For example, the first device 100 may convert the voice data into text data, and may detect the control command from the text data based on natural language processing. For example, the first device 100 may detect a control command that may be performed by the first device 100, by analyzing voice data including a voice saying 'start cleaning mode'. When the first device 100 is a cleaner, the first device 100 may detect a control command to 'switch the operation mode from standby mode to cleaning mode'; when the first device 100 is a window, the first device 100 may detect a control command to 'open the window'; and when the first device 100 is an air conditioner, the first device 100 may detect a control command to 'adjust the purification level to 'high".

According to an embodiment, the first device 100 may detect an operation code indicating the control command from the voice data. For example, when a command corresponding to 'cleaning mode' is included in the voice data, the first device 100 may detect 'operation code: 1', and when a command corresponding to 'away mode' is included in the voice data, the first device 100 may detect 'operation code: 2'.

In operation S340, the first device 100 may perform a control operation corresponding to the control command.

According to an embodiment, the control operation may be, but is not limited to, an operation of moving a part of the first device 100, an operation of setting or switching a mode of the first device 100, an operation of turning on or off the power, or an operation of executing a certain application.

According to an embodiment, when the detected control command includes a first operation code, the first device 100 may identify a first control operation corresponding to the first operation code from an operation table of the first device 100. The first device 100 may perform the first control operation. The operation table may be a table in which an operation code and a control operation are mapped to each other. The operation table may be different for each device according to a function provided by the device. For example, a different control operation may be mapped for each device even for the same operation code.

For example, when the first device 100 is a cleaner and 'operation code: 1' is detected from the voice data, the first device 100 may identify a control operation corresponding to 'operation code: 1' in an operation table of a cleaner. For example, the control operation corresponding to 'operation: 1' may be an 'operation of switching an operation mode from a standby mode to a cleaning mode'. In this case, the first device 100 may switch an operation mode of the first device 100 from a standby mode to a cleaning mode.

An operation in which the first device 100 performs the authentication of the user will now be described in more detail with reference to FIG. 5.

FIG. 5 is a flowchart for describing a method in which a first device performs authentication of a user according to an embodiment.

In operation S510, the second device 200 may receive a voice of a user through the microphone 211. For example, the second device 200 may receive a voice including a control command for controlling the first device 100 from the user.

According to an embodiment, the user may execute a voice recognition widget, and may input a voice command through the voice recognition widget. For example, when an event where a specific hardware key attached to the first device 100 is pressed for a certain period of time occurs, the first device 100 may provide a voice recognition widget 10.

The term "widget" used herein may refer to a mini-application (e.g., an application program or software) that is one of graphical user interfaces (GUIs: environments where the user may work through graphics) that smoothly support an interaction between the user and an application program operating system.

According to an embodiment, when an event where the user utters a personal authentication word occurs, the first device 100 may store a voice starting from the personal authentication word in an internal memory (or an external memory). For example, when the user utters 'Peter Pan' that is a personal authentication word and then utters 'I'm sleeping now', the first device 100 may store a voice saying 'Peter Pan, I'm sleeping now'.

In operation S520, the second device 200 may broadcast a packet including voice data corresponding to the received voice.

According to an embodiment, the second device 200 may generate the packet according to a pre-defined data format. For example, referring to FIG. 4, the second device 200 may generate the packet including the first field 401 including a beacon type, the second field 402 including a packet number, the third field 403 including a voice length, and the fourth field 404 including the voice data.

According to an embodiment, the second device 200 may generate the packet, by further including the fifth field 405 including an optional field flag, the sixth field 406 including an identification key, and the seventh field 407 including an operation (OP) code.

According to an embodiment, when the second device 200 stores a voice recognition model and a control command table (or an instruction database) in the internal memory, the second device 200 may obtain an operation code through the voice recognition model and an operation table. For example, the second device 200 may detect a control command from the voice data through the voice recognition model, and may obtain an operation code mapped to the detected control command from the operation table. The second device 200 may insert the obtained operation code into the seventh field 407.

According to another embodiment, the second device 200 may request the server device 300 for the operation code by transmitting the voice data to the server device 300. In this case, the server device 300 may detect the operation code from the voice data, based on the voice recognition model and the operation table. When the server device 300 transmits information about the operation code to the second device 200, the second device 200 may insert the received operation code into the seventh field 407.

According to an embodiment, the second device 200 may insert an identification key shared with the first device 100 into the sixth field 406. When additional information is included in the sixth field 406 or the seventh field 407, the second device 200 may set the optional field flag of the fifth field 405 as 'TRUE' and may cause the first device 100 to know whether the additional information (e.g., the identification key and the operation code) is included.

According to an embodiment, when the user utters a personal authentication word, the second device 200 may separate data about the personal authentication word from the voice data and may insert the separated data into the packet, but the disclosure is not limited thereto.

According to an embodiment, the second device 200 may broadcast the packet once, or may repeatedly broadcast the packet for a certain period of time.

In operation S530, the first device 100 may receive the packet including the voice data of the user. For example, the first device 100 may search the packet through short-range communication. Operation S530 corresponds to operation S310 of FIG. 3, and thus a detailed explanation thereof will be omitted.

In operations S540 and S550, the first device 100 may detect first voice feature information from the voice data, and may perform authentication of the user by using the first voice feature information. For example, the first device 100 may compare the first voice feature information with pre-stored second voice feature information, and when a similarity between the first voice feature information and the second voice feature information is equal to or greater than a threshold value, the first device 100 may determine that the authentication of the user succeeds. The first device 100 may perform operation S330 of FIG. 3, when the authentication of the user succeeds. In contrast, when a similarity between the first voice feature information and the second voice feature information is less than the threshold value, the first device 100 may determine that the authentication of the user fails.

In operations S540 and S560, when the first voice feature information is not detected from the voice data, the first device 100 may detect the identification key included in the packet. For example, the voice recognition model inside the first device 100 may not detect the first voice feature information from the voice data. In this case, the first device 100 may determine whether the optional field flag included in the packet is TRUE, and may extract the identification key included in the sixth field 406 when the optional field flag is TRUE.

In operation S570, when the first device 100 detects the identification key, the first device 100 may perform the authentication of the user, by using the identification key. For example, when the first device 100 obtains a first identification key from the packet, the first device 100 may determine whether the first identification key is identical to a second identification key shared with the second device 200. When the first identification key is identical to the second identification key, the first device 100 may determine that the authentication of the user succeeds and may proceed to operation S330 of FIG. 3. When the first identification key is different from the second identification key, the first device 100 may determine that the authentication of the user fails.

According to an embodiment, when the optional field flag included in the packet is not 'TRUE' or the identification key is not inserted into the sixth field 406, the first device 100 may determine that it is impossible to perform the authentication of the user.

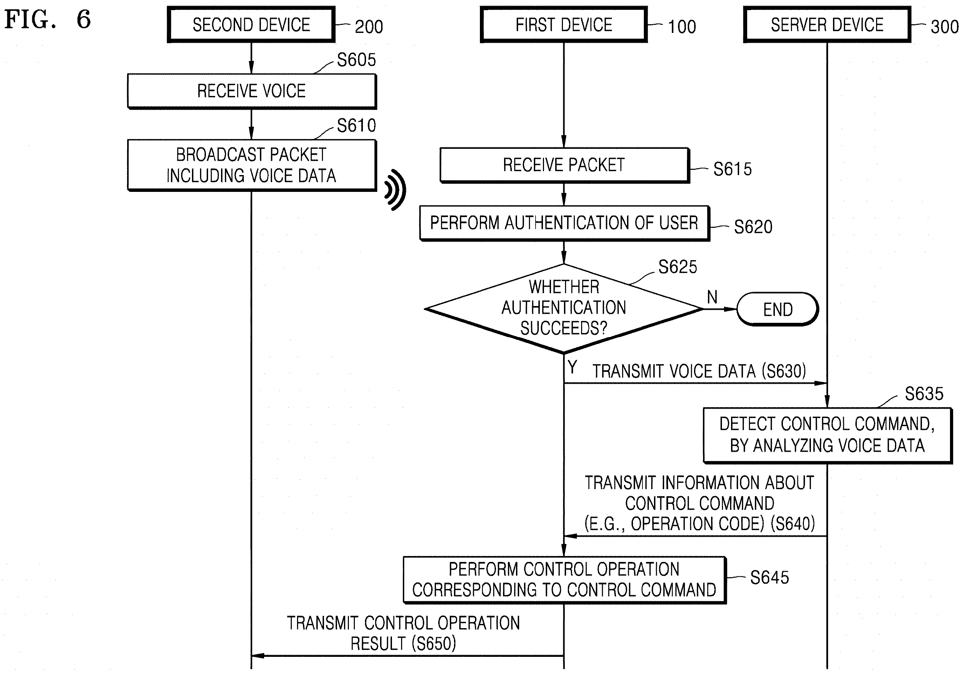

An operation in which the first device 100 performs the voice command in association with the server device 300 when the authentication of the user succeeds will now be described in detail with reference to FIG. 6.

FIG. 6 is a flowchart for describing a method in which a first device performs a voice command in association with a server device according to an embodiment.

In operation S605, the second device 200 may receive a voice of a user through the microphone 211. In operation S610, the second device 200 may broadcast a packet including voice data corresponding to the received voice. In operation S615, the first device 100 may receive the packet including the voice data of the user. Operations S605 through S615 correspond to operations S510 through S530 of FIG. 5, and thus a detailed explanation thereof will be omitted.

In operation S620, the first device 100 may perform authentication of the user. According to an embodiment, the first device 100 may detect first voice feature information from the voice data, and may perform the authentication of the user based on a comparison result between the detected first voice feature information and pre-stored second voice feature information. Alternatively, the first device 100 may perform the authentication of the user, by using an identification key shared between the first device 100 and the second device 200. An operation in which the first device 100 performs the authentication of the user has been described in detail with reference to FIG. 5, and thus a repeated explanation thereof will be omitted.

In operations S625 and S630, when the authentication of the user succeeds, the first device 100 may request the server device 300 for information about a control command included in the voice data, by transmitting the voice data to the server device 300. According to an embodiment, the first device 100 may not include a voice recognition model capable of detecting the control command by analyzing the voice data. Accordingly, the first device 100 may request the server device 300 connected to the first device 100 to analyze the voice data.

In operation S635, the server device 300 may detect the control command, by analyzing the voice data.

According to an embodiment, the server device 300 may analyze the voice data received from the first device 100, based on natural language processing. For example, the server device 300 may convert the voice data into text data, and may detect the control command from the text data based on natural language processing. For example, the server device 300 may detect a control command that may be performed by the first device 100, by analyzing voice data including a voice 'start cleaning mode'.

According to an embodiment, the server device 300 may detect an operation code indicating the control command from the voice data. For example, when a command corresponding to 'cleaning mode' is included in the voice data, the server device 300 may detect 'operation code: 1', and when a command corresponding to 'away mode' is included in the voice data, the server device 300 may detect 'operation code: 2', based on a table in which a control command and an operation code are mapped to each other.

In operation S640, the server device 300 may transmit information about the detected control command to the first device 100. For example, the server device 300 may transmit an operation code indicating the control command to the first device 100.

In operation S645, the first device 100 may perform a control operation corresponding to the control command. For example, when the first device 100 receives a first operation code from the server device 300, the first device 100 may identify a first control operation corresponding to the first operation code from an operation table of the first device 100. The first device 100 may perform the first control operation. Operation S645 corresponds to operation S340 of FIG. 3, and thus a detailed explanation thereof will be omitted.

In operation S650, according to an embodiment, when a communication link with the second device 200 is formed, the first device 100 may transmit a control operation result to the second device 200. For example, the first device 100 may transmit a result obtained after switching an operation mode, a result obtained after changing a set value, and a result obtained after performing a mechanical operation to the second device 200 through a short-range communication link.

In this case, the second device 200 may provide a control operation result through a user interface. For example, when a user voice saying "cleaning mode" is input, the second device 200 may display information such as 'Robot Cleaner: Switch from standby mode to cleaning mode, Window: OPEN, or Air Purifier: ON" on a display, or may output information as a voice through a speaker.

According to an embodiment, an operation of performing the authentication of the user may be performed by the first device 100, and an operation of obtaining the control command by performing voice recognition may be performed by the server device 300.

According to an embodiment, some of operations S605 through S650 may be omitted, and an order of some of operations S605 through S650 may be changed.

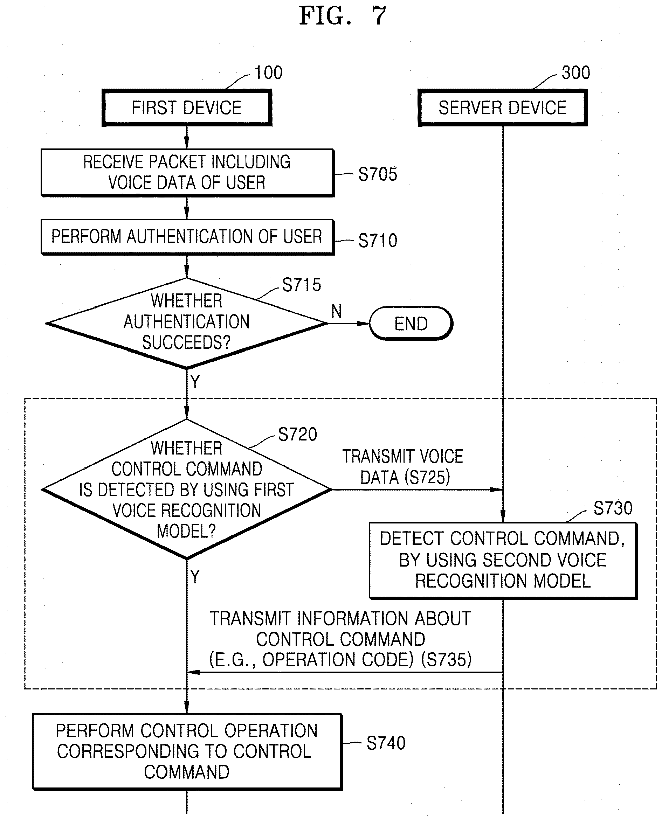

FIG. 7 is a flowchart for describing a method in which a first device performs a voice command in association with a server device according to another embodiment.

In operation S705, the first device 100 according to an embodiment may receive a packet including voice data of a user. In operation S710, the first device 100 may perform authentication of the user based on the voice data. Operations S705 and S710 correspond to operations S615 and S620 of FIG. 6, and thus a detailed explanation thereof will be omitted.

In operations S715 and S720, when the authentication of the user succeeds, the first device 100 may detect a control command from the voice data, by using a first voice recognition model stored in the first device 100. When the first device 100 detects the control command from the voice data, the first device 100 may perform a control operation corresponding to the control command (operation S740).

In operations S720 and S725, when the first device 100 fails to detect the control command by using the first voice recognition model, the first device 100 may request the server device 300 to analyze the voice data, by transmitting the voice data to the server device 300.

In operation S730, the server device 300 may detect the control command from the voice data, by using a second voice recognition model. For example, the server device 300 may convert the voice data into text data, and may detect the control command from the text data based on natural language processing.

According to an embodiment, the server device 300 may obtain an operation code indicating the control command, by analyzing the voice data. For example, when a command corresponding to 'cleaning mode' is included in the voice data, the server device 300 may detect 'operation code: 1', and when a command corresponding to 'away mode' is included in the voice data, the server device 300 may detect 'operation code: 2', based on a table in which a control command and an operation code are mapped to each other.

According to an embodiment, the performance of the second voice recognition model of the server device 300 may be better than that of the first voice recognition model of the first device 100. For example, the natural language processing ability of the second voice recognition model may be better than that of the first voice recognition model. Accordingly, the server device 300, instead of the first device 100, may analyze the voice data.

In operation S735, the server device 300 may transmit information about the control command to the first device 100. For example, the server device 300 may transmit an operation code indicating the control command to the first device 100.

In operation S740, the first device 100 may perform a control operation corresponding to the control command. For example, when the first device 100 receives a first operation code from the server device 300, the first device 100 may identify a first control operation corresponding to the first operation code from an operation table of the first device 100. The first device 100 may perform the first control operation. Operation S740 corresponds to operation S340 of FIG. 3, and thus a detailed explanation thereof will be omitted.

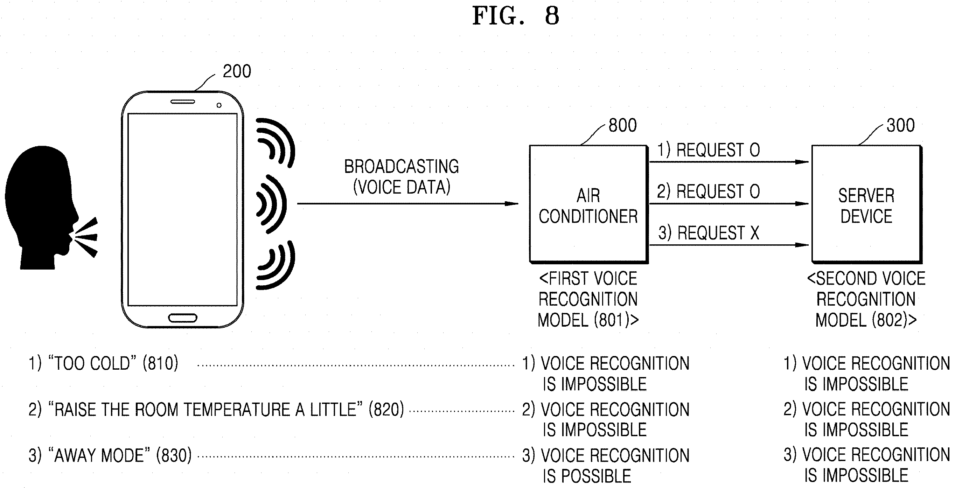

FIG. 8 is a diagram for describing a first voice recognition model of a first device and a second voice recognition model of a server device according to an embodiment. FIG. 8 will be described assuming that the first device 100 is an air conditioner 800.

According to an embodiment, the second device 200 may obtain a first voice command 810 corresponding to "too cold" through the microphone 211. In this case, the second device 200 may generate a packet into which first voice data saying "too cold" is inserted, and may broadcast the generated packet. In this case, the air conditioner 800 may search the packet, and may analyze the first voice data included in the searched packet by using a first voice recognition model 801. However, when the first voice recognition model 801 fails to accurately detect a control command (e.g., to change the set temperature of the air conditioner 800 from 20°C to 25°C) from the first voice data (e.g., too cold), the air conditioner 800 may transmit the first voice data (e.g., too cold) to the server device 300. The server device 300 may analyze the first voice data (e.g., too cold), by using a second voice recognition model 802. The server device 300 may detect the control command (e.g., to change the set temperature of the air conditioner 800 from 20°C to 25°C) from the first voice data (e.g., too cold), or may detect 'aaa' as an operation code corresponding to the control command. When the server device 300 transmits the control command (e.g., to change the set temperature of the air conditioner 800 from 20°C to 25°C) or the operation code (e.g., aaa) to the air conditioner 800, the air conditioner 800 may change a set temperature from 20°C to 25°C.

According to an embodiment, the second device 200 may obtain a second voice command 820 "to raise the room temperature a little" through the microphone 211. In this case, the second device 200 may generate a packet into which second voice data saying "raise the room temperature a little" is inserted, and may broadcast the generated packet. In this case, the air conditioner 800 may search the packet, and may attempt to analyze the second voice data included in the packet by using the first voice recognition model 801. However, when the first voice recognition model 801 fails to accurately detect the control command (e.g., to change the set temperature of the air conditioner 800 from 20°C to 25°C) from the second voice data (e.g., raise the room temperature a little), the air conditioner 800 may transmit the second voice data (e.g., raise the room temperature a little) to the server device 300. The server device 300 may analyze the second voice data (e.g., raise the room temperature a little), by using the second voice recognition model 802. The server device 300 may detect the control command (e.g., to change the set temperature of the air conditioner 800 from 20°C to 25°C) from the second voice data (e.g., raise the room temperature a little), or may detect 'aaa' as an operation code corresponding to the control command. When the server device 300 transmits the control command (e.g., to change the set temperature of the air conditioner 800 from 20°C to 25°C) or the operation code (e.g., aaa) to the air conditioner 800, the air conditioner 800 may change a set temperature from 20°C to 25°C.

According to an embodiment, the second device 200 may obtain a third voice command 830 corresponding to "away mode" through the microphone 211. In this case, the second device 200 may generate a packet into which third voice data saying "away mode" is inserted, and may broadcast the generated packet. In this case, the air conditioner 800 may search the packet, and may analyze the third voice data included in the searched packet by using the first voice recognition model 801. When the first voice recognition model 801 accurately detects a control command (e.g., to set the operation mode of the air conditioner 800 as an away mode) or an operation mode (e.g., 'bbb') indicating the control command from the third voice data (e.g., away mode), the air conditioner 800 may set an operation mode of the air conditioner 800 as an away mode, without requesting the server device 300 to analyze the third voice data,.

Although the first device 100 includes a voice recognition model in FIGS. 3 through 8, the following will be described, assuming that the first device 100 does not include a voice recognition model, with reference to FIGS. 9 through 14.

FIG. 9 is a flowchart for describing a method in which a first device performs a voice command according to an embodiment.

In operation S910, the first device 100 may receive a packet including voice data of a user broadcast from the second device 200. For example, the second device 200 may receive a voice command uttered by the user, and may insert the voice data including the voice command into the packet. When the second device 200 broadcasts the packet, the first device 100 located at a certain distance from the second device 200 may search the packet through short-range communication.

The packet according to an embodiment may include, but is not limited to, the first field 401 indicating a beacon type, the second field 402 indicating a packet number, the third field 403 indicating a voice length, and the fourth field 404 including the voice data. For example, the packet may further include the fifth field including an optional field flag, a sixth field 406 including an identification key, and the seventh field 407 including an operation (OP) code. When the packet further includes the identification key and the operation code, the optional field flag may be displayed as 'TRUE'.

In operation S920, the first device 100 may transmit the voice data to the server device 300. For example, when the first device 100 receives the packet, the first device 100 may extract the voice data from the packet, and may transmit the extracted voice data to the server device 300. In this case, the first device 100 may request the server device 300 for information about user authentication and a control command based on the voice data.

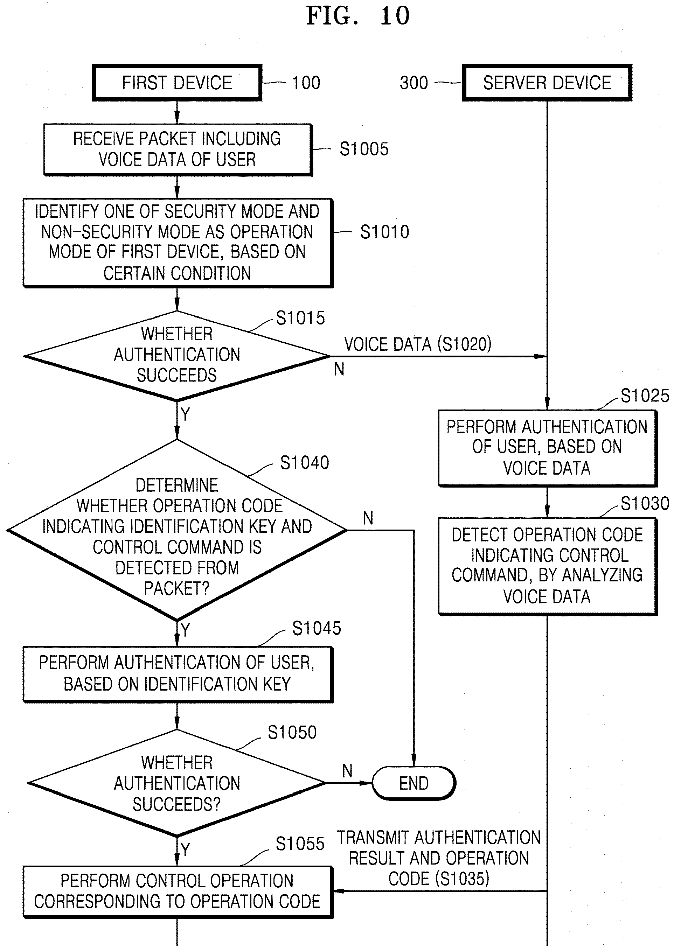

According to an embodiment, when the first device 100 receives the packet, the first device 100 may identify one of a security mode and a non-security mode as an operation mode of the first device 100, based on a certain condition. The security mode may be a mode in which the server device 300 performs authentication of the user and analyzes the voice data, and the non-security mode may be a mode in which the first device 100 performs authentication of the user and analyzes the voice data. According to an embodiment, the first device 100 may transmit the voice data to the server device 300 when the identified operation mode of the first device 100 is the security mode, and may not transmit the voice data to the server device 300 when the operation mode of the first device 100 is the non-security mode. A method in which the first device 100 identifies the operation mode will be described below in detail with reference to FIGS. 10 through 13.

In operation S930, the first device 100 may receive, from the server device 300, a result of the authentication of the user based on the voice data and the control command detected from the voice data.

According to an embodiment, the server device 300 may perform the authentication of the user, by using pattern matching. For example, the server device 300 may detect first voice feature information from the voice data received from the first device 100, and may compare the first voice feature information with pre-stored (or pre-registered) second voice feature information. The second voice feature information may be feature information detected from a voice that is pre-registered in the server device 300 for authentication of the user. The server device 300 may detect the first voice feature information from the voice data by using, but not limited to, linear predictive coefficient, cepstrum, mel-frequency cepstral coefficient (MFCC), or filter bank energy.

According to an embodiment, the server device 300 may perform the authentication of the user, based on a comparison result between the first voice feature information and the second voice feature information. For example, when a similarity between the first voice feature information and the second voice feature information is equal to or greater than a threshold value (e.g., 99%), the server device 300 may determine that the authentication of the user succeeds. In contrast, when a similarity between the first voice feature information and the second voice feature information is less than the threshold value, the server device 300 may determine that the authentication of the user fails.

According to an embodiment, the server device 300 may distinguish feature information of a voice actually uttered by the user from feature information of a recorded voice. Accordingly, when the voice data includes a recorded voice, the server device 300 may determine that the authentication of the user fails, and when the voice data includes a voice uttered by the user in real time, the server device 300 may determine that the authentication of the user succeeds.

According to an embodiment, the server device 300 may identify a personal authentication word from the voice data, and may detect the first voice feature information from the identification personal authentication word. In this case, because the server device 300 detects the first voice feature information from a short word, the amount of calculation may be reduced. Also, because the authentication of the user may succeed only when the personal authentication word is included in the voice data, security may be enhanced.

For example, when the user pre-registers 'Peter Pan' as a personal authentication word, the second device 200 may extract second voice feature information from a voice of the user who utters 'Peter Pan', and may store the second voice feature information. Accordingly, in order for the user to control the first device 100 later, the user has to utter a voice including 'Peter Pan'. For example, when the user utters "Peter Pan, cleaning mode", the second device 200 may detect a voice command ("Peter Pan, cleaning mode") of the user, may generate a packet including the voice command according to a pre-defined format, and may broadcast the packet. In this case, the first device 100 may receive the packet including the voice command ("Peter Pan, cleaning mode"), and may identify voice data related to 'Peter Pan' from the packet. The first device 100 may transmit the voice data related to 'Peter Pan' to the server device 300. The server device 300 may extract first voice feature information from the voice data related to 'Peter Pan'. The server device 300 may perform user authentication, based on a comparison result between the first voice feature information and the pre-stored second voice feature information.

According to an embodiment, the server device 300 may transmit a user authentication result to the first device 100. For example, the server device 300 may transmit a user authentication success message or a user authentication failure message to the first device 100.

According to an embodiment, the server device 300 may generate result data obtained by analyzing the voice data based on natural language processing. For example, the server device 300 may convert the voice data into text data, and may detect the control command from the text data based on natural language processing. In this case, according to an embodiment, the server device 300 may detect an operation code indicating the control command from the voice data. For example, when a command corresponding to 'cleaning mode' is included in the voice data, the server device 300 may detect 'operation code: 1', and when a command corresponding to 'away mode' is included in the voice data, the server device 300 may detect 'operation code: 2'.

According to an embodiment, the server device 300 may detect a control command that may be performed by the first device 100, based on identification information of the first device 100 that transmits the voice data. For example, when the first device 100 is a cleaner, the server device 300 may detect a control command to 'switch the operation mode from standby mode to cleaning mode'; when the first device 100 is a window, the server device 300 may detect a control command to 'open the window', and when the first device 100 is an air conditioner, the server device 300 may detect a control command to 'set the purification level to 'high".

According to an embodiment, the server device 300 may transmit information about the control command detected from the voice data to the first device 100. For example, the server device 300 may transmit information about the detected operation code to the first device 100.

According to an embodiment, the server device 300 may transmit the user authentication result and the information about the detected control command together to the first device 100, or may separately transmit the user authentication result and the information about the detected control command to the first device 100. According to an embodiment, when the authentication of the user fails, the server device 300 may transmit only a result message indicating that the authentication of the user fails to the first device 100, and may not transmit the information about the detected control command to the first device 100.

In operation S940, the first device 100 may perform a control operation corresponding to the control command, when the authentication of the user succeeds.

According to an embodiment, when the user authentication result received from the server device 300 indicates that the authentication of the user succeeds, the first device 100 may perform a control operation corresponding to the control command included in the received information. According to an embodiment, the control operation may be, but is not limited to, an operation of moving a part of the first device 100, an operation of setting or switching a mode of the first device 100, an operation of turning on or off the power, or an operation of executing a certain application.

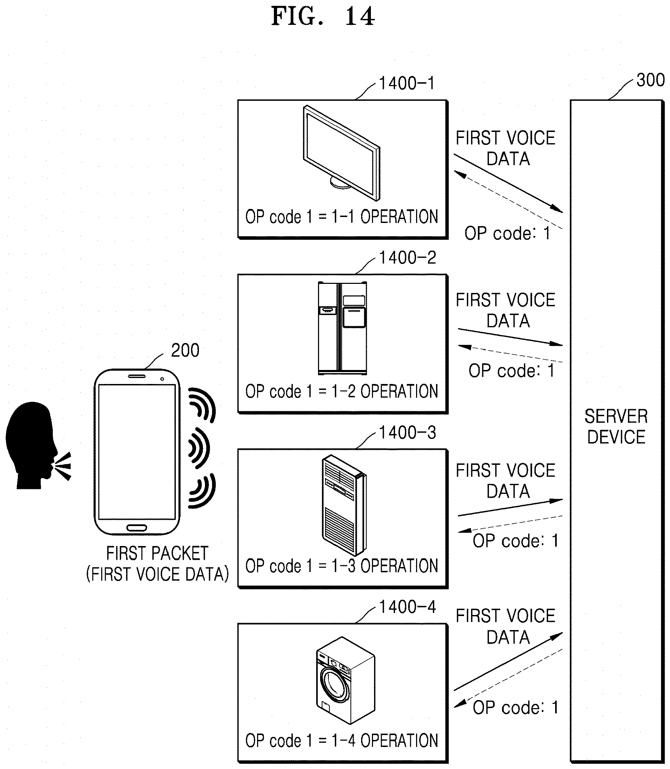

According to an embodiment, when the information about the control command received from the server device 300 includes a first operation code indicating the control command, the first device 100 may identify a first control operation corresponding to the first operation code from an operation table of the first device 100. The first device 100 may perform the first control operation. According to an embodiment, the operation table may be a table in which an operation code and a control operation are mapped to each other. The operation table may be different for each device according to a function provided by the device. For example, a different control operation may be mapped for each device even for the same operation code. The operation code will be described in more detail below with reference to FIG. 14.

According to an embodiment, the operation mode of the first device 100 may be determined, based on a user input. For example, when the user pre-sets a security mode as a default mode, the first device 100 may identify the security mode as the operation mode of the first device 100.

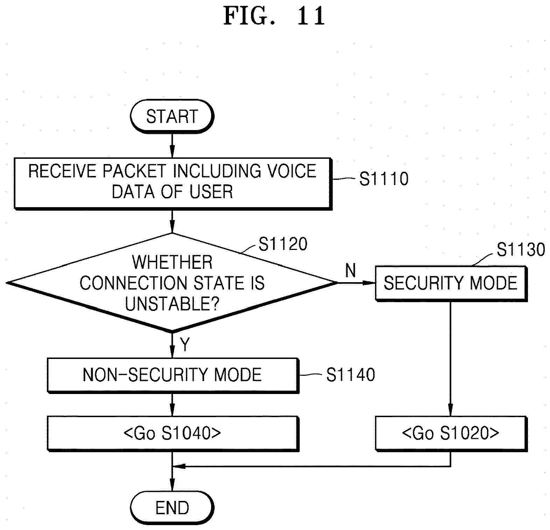

According to an embodiment, the operation mode of the first device 100 may be determined based on a connection state between the first device 100 and the server device 300. For example, when the first device 100 may not connect to the server device 300, the first device 100 may not transmit the voice data to the server device 300, and thus may determine that the operation mode of the first device 100 is a non-security mode. An operation in which the first device 100 determines an operation mode based on a connection state with the server device 300 will be described below in detail with reference to FIG. 11.

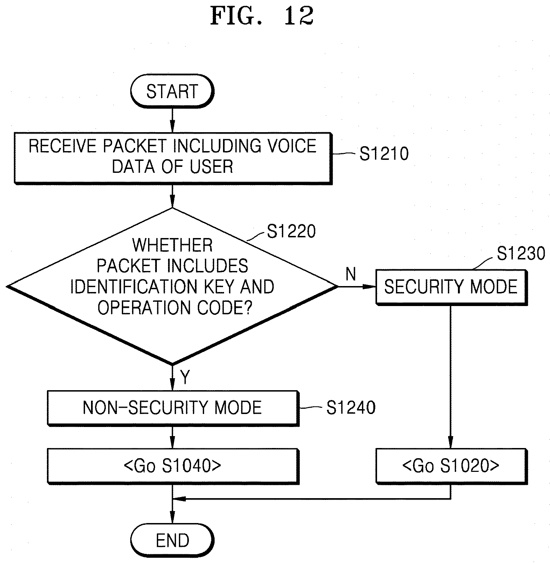

According to an embodiment, the first device 100 may determine the operation mode of the first device 100, based on whether the packet includes the identification key and the operation code. For example, the first device 100 may determine the operation mode of the first device 100 according to whether the optional field flag included in the packet is TRUE. An operation in which the first device 100 determines the operation mode of the first device 100 based on whether the packet includes the identification key and the operation code will be described below in more detail with reference to FIG. 12.

In operations S1015 and S1020, when an operation mode of the first device 100 is a security mode, the first device 100 may transmit voice data to the server device 300. Operation S1020 corresponds to operation S920 of FIG. 9, and thus a detailed explanation thereof will be omitted.

In operation S1025, the server device 300 may perform authentication of a user, based on the received voice data. For example, the server device 300 may detect first voice feature information from the voice data received from the first device 100, and may compare with the first voice feature information with pre-stored (or pre-registered) second voice feature information. The second voice feature information may be feature information detected from a voice pre-registered in the server device 300 for authentication of the user. According to an embodiment, the server device 300 may perform the authentication of the user, based on a comparison result between the first voice feature information and the second voice feature information. For example, when a similarity between the first voice feature information and the second voice feature information is equal to or greater than a threshold value (e.g., 99%), the server device 300 may determine that the authentication of the user succeeds. In contrast, when a similarity between the first voice feature information and the second voice feature information is less than the threshold value, the server device 300 may determine that the authentication of the user fails.

In operation S1030, the server device 300 may detect an operation code indicating a control command, by analyzing the voice data.

According to an embodiment, the server device 300 may detect the control command from the voice data, by analyzing the voice data by using natural language processing. According to an embodiment, the server device 300 may detect the operation code indicating the control command from the voice data. For example, when a command corresponding to 'scenario 1' is included in the voice data, the server device 300 may detect 'operation code: 1', and when a command corresponding to 'scenario 2' is included in the voice data, the server device 300 may detect 'operation code: 2', by using a control command table. The control command table may be a table in which a control command and an operation code are mapped to each other.

In operation S1035, the server device 300 may transmit an authentication result and the operation code to the first device 100.

According to an embodiment, the server device 300 may transmit a user authentication result and information about the detected control command together to the first device 100, or may separately transmit the user authentication result and the information about the detected control command to the first device 100. According to an embodiment, when the authentication of the user fails, the server device 300 may transmit only a result message indicating that the authentication of the user fails to the first device 100, and may not transmit the information about the detected control command to the first device 100.

Operations S1025, S1030, and S1035 correspond to operation S930 of FIG. 9, and thus a detailed explanation thereof will be omitted.

In operation S1055, the first device 100 may perform a control operation corresponding to the operation code, when the authentication of the user succeeds. According to an embodiment, when the first device 100 receives a first operation code from the server device 300, the first device 100 may identify a first control operation corresponding to the first operation mode from an operation table of the first device 100. The first device 100 may perform the first control operation.

In operations S1015 and S1040, when the operation mode of the first device 100 is a non-security mode, the first device 100 may detect an operation code indicating a control command and an identification key from a packet. For example, the first device 100 may obtain a first identification key inserted into the sixth field 406 of the packet. Also, the first device 100 may detect a first operation code inserted into the seventh field 407 of the packet.

In operation S1045, the first device 100 may perform authentication of the user, based on the detected identification key. For example, the first device 100 may compare the detected first identification key with a pre-stored second identification key. When the first identification key is identical to the second identification key, the first device 100 may determine that the authentication of the user succeeds. In contrast, when the first identification key and the second identification key are not identical to each other, the first device 100 may determine that the authentication of the user fails. When the first device 100 and the second device 200 have been previously connected to each other, the second identification key may be a security key shared through exchange.

In operations S1050 and S1055, when the authentication of the user succeeds based on the identification key, the first device 100 may perform a control operation corresponding to the operation code detected from the packet. According to an embodiment, when the first operation code is detected from the seventh field 407 of the packet, the first device 100 may identify a first control operation corresponding to the first operation code from the operation table of the first device 100. The first device 100 may perform the first control operation.

FIG. 11 is a flowchart for describing a method of identifying an operation mode of a first device based on connection state information between the first device and a server device according to an embodiment.

In operation S1110, the first device 100 may receive a packet including voice data of a user broadcast from the second device 200. Operation S1110 corresponds to operation S910 of FIG. 9, and thus a detailed explanation thereof will be omitted.

In operation S1120, when the first device 100 receives the packet, the first device 100 may determine whether a connection state between the first device 100 and the server device 300 is unstable. For example, when the first device 100 may not connect to the server device 300 or a duration for which the first device 100 connects to the server device 300 is less than a threshold value (e.g., 30 seconds), the first device 100 may determine that the connection state between the first device 100 and the server device 300 is unstable.

In operations S1120 and S1130, when the connection state between the first device 100 and the server device 300 is stable, the first device 100 may identify an operation mode of the first device 100 as a security mode. In this case, the first device 100 may perform operation S1020 of FIG. 10. That is, the first device 100 may request the server device 300 for information about user authentication and a control command based on the voice data, by transmitting the voice data to the server device 300. The first device 100 may receive a user authentication result and an operation code from the server device 300, and may perform a control operation corresponding to the operation code when the authentication of the user succeeds.

In operations S1120 and S1140, when the connection state between the first device 100 and the server device 300 is unstable, the first device 100 may identify the operation mode of the first device 100 as a non-security mode. In this case, the first device 100 may perform operation S1040 of FIG. 10. That is, the first device 100 may detect an operation code indicating an identification key and a control command from the packet. The first device 100 may perform authentication of the user based on the identification key, and may perform a control operation corresponding to the operation code when the authentication of the user succeeds.

FIG. 12 is a flowchart for describing a method in which a first device identifies an operation mode of the first device based on information included in a packet according to an embodiment.

In operation S1210, the first device 100 may receive a packet including voice data of a user broadcast from the second device 200. Operation S1110 corresponds to operation S910 of FIG. 9, and thus a detailed explanation thereof will be omitted.

In operation S1220, when the first device 100 receives the packet, the first device 100 may determine whether the packet includes an identification key and an operation code. For example, the first device 100 may determine whether an optional field flag included in the fifth field 405 of the packet is 'TRUE'. When the optional field flag is 'TRUE', the first device 100 may determine that the packet includes the identification key and the operation code. In contrast, when the optional field flag is not 'TRUE', the first device 100 may determine that the packet does not include the identification key and the operation code.

In operations S1220 and S1230, when the packet does not include the identification key and the operation code, the first device 100 may determine that an operation mode of the first device 100 is a security mode. In this case, the first device 100 may perform operation S1020 of FIG. 10. For example, the first device 100 may request the server device 300 for information about user authentication and the operation code based on the voice data, by transmitting the voice data to the server device 300. The first device 100 may receive a user authentication result and the operation code from the server device 300, and may perform a control operation corresponding to the operation code when the authentication of the user succeeds.

In operations S1220 and S1240, when the packet includes the identification key and the operation code, the first device 100 may determine that the operation mode of the first device 100 is a non-security mode. In this case, the first device 100 may perform operation S1040 of FIG. 10. That is, the first device 100 may detect an operation code indicating a control command and an identification key from the packet. The first device 100 may perform authentication of the user based on the identification key, and may perform a control operation corresponding to the operation code when the authentication of the user succeeds.

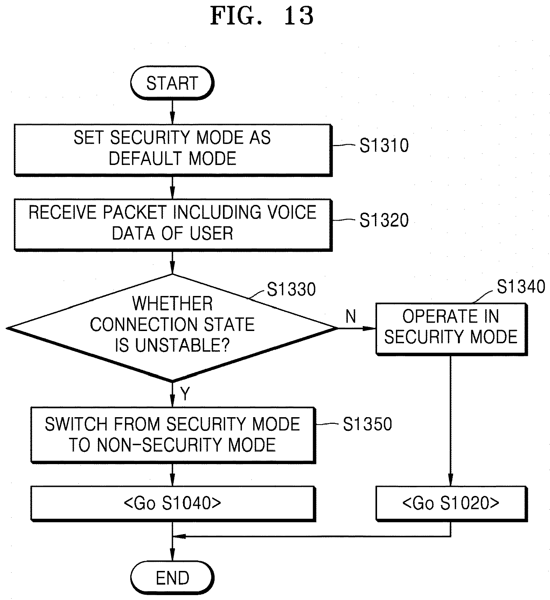

An operation in which the first device 100 switches an operation mode of the first device 100 from a security mode into a non-security mode based on connection state information between the first device 100 and the server device 300 will now be described with reference to FIG. 13.

FIG. 13 is a flowchart for describing a method in which a first device switches an operation mode according to an embodiment.

In operation S1310, the first device 100 may set a security mode as a default mode. According to an embodiment, the first device 100 may receive an input that sets a security mode as a default mode from a user. Alternatively, when the first device 100 is released, a security mode may be set as a default mode.

In operation S1320, the first device 100 may receive a packet including voice data of the user. For example, the first device 100 may search the packet including the voice data of the user broadcast from the second device 200 through short-range communication. Operation S1320 corresponds to operation S910 of FIG. 9, and thus a detailed explanation thereof will be omitted.

In operation S1330, when the first device 100 receives the packet, the first device 100 may determine whether a connection state between the first device 100 and the server device 300 is unstable. For example, when the first device 100 may not connect to the server device 300 or a duration for which the first device 100 connects to the server device 300 is less than a threshold value (e.g., 30 seconds), the first device 100 may determine that the connection state between the first device 100 and the server device 300 is unstable.

In operations S1330 and S1340, when the connection state between the first device 100 and the server device 300 is stable, the first device 100 may operate in the security mode that is a default mode. The first device 100 may perform operation S1020 of FIG. 10. For example, the first device 100 may request the server device 300 for user authentication and an operation code, by transmitting the voice data to the server device 300. The first device 100 may receive a user authentication result and the operation code from the server device 300, and may perform a control operation corresponding to the operation code when the authentication of the user succeeds.

In operations S1330 and S1350, when the connection state between the first device 100 and the server device 300 is unstable, the first device 100 may switch an operation mode of the first device 100 from the security mode to a non-security mode. The first device 100 may perform operation S1040 of FIG. 10. For example, the first device 100 may detect an operation code indicating an identification key and a control command from the packet. The first device 100 may perform authentication of the user based on the identification key, and may perform a control operation corresponding to the operation code when the authentication of the user succeeds.

FIG. 14 is a diagram for describing an operation in which each of a plurality of devices performs a voice command according to an embodiment. FIG. 14 will be described assuming that the first device 100 includes a TV 1400-1, a refrigerator 1400-2, an air conditioner 1400-3, and a washing machine 1400-4.

A user may utter a voice command. For example, the user may input a voice saying 'let's clean' to the second device 200. The second device 200 may detect the voice (e.g., let's clean) of the user through the microphone 211. In this case, the second device 200 may generate a first packet including first voice data related to 'let's clean'. The second device 200 may broadcast the first packet through short-range communication (e.g., Wi-Fi). In this case, even when the second device 200 does not form a communication link with external devices (e.g., the first device 100)), the second device 200 may transmit the first packet.

Each of the TV 1400-1, the refrigerator 1400-2, the air conditioner 1400-3, and the washing machine 1400-4 located within a certain distance from the second device 200 may receive the first packet broadcast from the second device 200. In this case, each of the TV 1400-1, the refrigerator 1400-2, the air conditioner 1400-3, and the washing machine 1400-4 may extract the first voice data from the first packet, and may transmit the extracted first voice data to the server device 300.

The server device 300 may obtain the first voice data from each of the TV 1400-1, the refrigerator 1400-2, the air conditioner 1400-3, and the washing machine 1400-4. Because voice data obtained from the TV 1400-1, the refrigerator 1400-2, the air conditioner 1400-3, and the washing machine 1400-4 are all the first voice data, user authentication results based on the first voice data and operation codes extracted from the first voice data may be the same.

When first voice feature information (e.g., a first voice pattern) extracted from the first voice data is similar to pre-registered second voice feature information (e.g., a second voice pattern) of the user, the server device 300 may determine that authentication of the user succeeds. Also, the server device 300 may detect '1' as an operation code corresponding to the first voice data (e.g., 'let's clean'). The server device 300 may transmit information about a user authentication result and the detected operation code '1' to each of the TV 1400-1, the refrigerator 1400-2, the air conditioner 1400-3, and the washing machine 1400-4.

The TV 1400-1 may receive the operation code '1' from the server device 300, and may identify a 1-1 operation corresponding to the operation code 1 in a first operation table of the TV 1400-1. For example, the 1-1 operation corresponding to the operation code 1 is 'outputting a music broadcast channel', the TV 1400-1 may switch a current news channel to a music broadcast channel.

The refrigerator 1400-2 may receive the operation code '1' from the server device 300, and may identify a 1-2 operation corresponding to the operation code 1 in a second operation table. For example, when the 1-2 operation corresponding to the operation code 1 is 'displaying expired food', the refrigerator 1400-2 may display a list of expired foods among stored foods on a display unit.

The air conditioner 1400-3 may receive the operation code 1 from the server device 300, and may identify a 1-3 operation corresponding to the operation code 1 in a third operation table of the air conditioner 1400-3. For example, when the 1-3 operation corresponding to the operation code 1 is 'setting a ventilation mode', the air conditioner 1400-3 may set an operation mode as a ventilation mode.

The washing machine 1400-4 may receive the operation code 1 from the server device 300, and may identify a 1-4 operation corresponding to the operation code 1 in a fourth operation table of the washing machine 1400-4. For example, when the 1-4 operation is 'washing and drying', the washing machine 1400-4 may perform a washing operation and a drying operation on clothes.

Accordingly, according to an embodiment, even when the user does not input a control command to each of the TV 1400-1, the refrigerator 1400-2, the air conditioner 1400-3, and the washing machine 1400-4, with only the voice saying 'let's clean', the TV 1400-1 may switch a current news channel to a music broadcast channel, the refrigerator 1400-2 may display a list of expired foods, the air conditioner 1400-3 may set an operation mode as a ventilation mode, and the washing machine 1400-4 may perform a washing operation and a drying operation on clothes.

Although not shown in FIG. 14, when a lighting device receives the operation code 1 from the server device 300, the lighting device may search a control operation corresponding to the operation code 1 in a fifth operation table of the lighting device. However, when the control operation corresponding to the operation code 1 does not exist in the fifth operation table, the lighting device may not perform any operation.

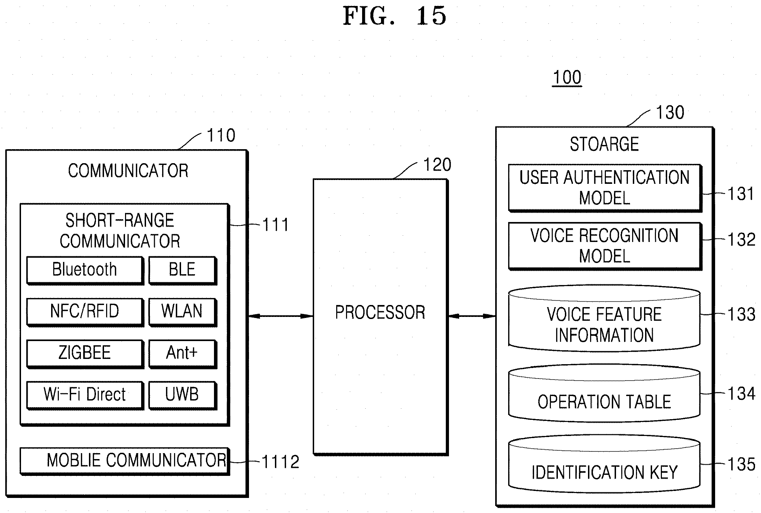

FIG. 15 is a block diagram for describing a configuration of a first device (command execution device) according to an embodiment.

Referring to FIG. 15, the first device 100 may include a communicator 110, a processor 120, and a storage 130. However, not all elements illustrated in FIG. 15 are essential elements. The first device 100 may include more or fewer elements than those illustrated in FIG. 15. For example, the first device 100 may include the processor 120 and the communicator 110, or may include the processor 120, the communicator 110, and an outputter (not shown), but the disclosure is not limited thereto.

The elements will be sequentially described.

The communicator 110 may include one or more elements for communication between the first device 100 and the second device 200 or between the first device 100 and the server device 300. For example, the communicator 110 may include a short-range communicator 111 and a mobile communicator 112.

Examples of the short-range communicator 111 may include, but are not limited to, a Bluetooth communicator, a Bluetooth low energy (BLE) communicator, a near-field communicator, a WLAN (Wi-Fi) communicator, a Zigbee communicator, an infrared data association (IrDA) communicator, a Wi-Fi direct (WFD) communicator, an ultra-wideband (UWB) communicator, and an Ant+ communicator. For example, the short-range communicator 121 may include a light fidelity (Li-Fi) communicator.

Li-Fi may be a subset of visible light communication (VLC) that transmits information by using a wavelength of light emitted from a light-emitting diode (LED). Li-Fi (Light Fidelity) may be used wherever there is lighting and is harmless to the human body. In addition, Li-Fi (Light Fidelity) has the advantages of high stability and security due to a short transmission distance, low cost, and high-speed communication.

The mobile communicator 112 transmits/receives a wireless signal to/from at least one of a base station, an external terminal, and a server via a mobile communication network. Examples of the wireless signal may include a voice call signal, a video call signal, and any of various pieces of data according to text/multimedia message transmission/reception.

The communicator 110 may receive a packet including voice data of a user broadcast from the second device 200. For example, the communicator 110 may search the packet including the voice data of the user through a first communicator (e.g., the short-range communicator 111).

The communicator 110 may transmit the voice data of the user to the server device 300, and may receive information about a control command detected by analyzing the voice data from the server device 300. In this case, the information about the control command may include an operation code indicating the control command.

According to an embodiment, the communicator 110 may include a first communicator that receives the packet including the voice data of the user broadcast from the second device 200 and a second communicator that transmits the voice data to the server device 300. The second communicator may receive, from the server device 300, the information about the control command detected from the voice data and a result of authentication of the user based on the voice data.

The processor 120 generally controls an overall operation of the first device 100. For example, the processor 120 may control the communicator 110 and the storage 130 by executing programs stored in the storage 130.

The processor 120 may perform authentication of the user, by using the voice data included in the packet. For example, the processor 120 may detect first voice feature information from the voice data, may compare the first voice feature information with pre-stored second voice feature information, and may perform authentication of the user based on a comparison result. According to an embodiment, the processor 120 may identify a personal authentication word from the voice data, and may detect the first voice feature information from the personal authentication word.

When the processor 120 fails to detect the first voice feature information from the voice data, the processor 120 may detect an identification key from the packet and may perform authentication of the user based on the detected identification key.

The processor 120 may detect a control command from the voice data, when the authentication of the user succeeds. For example, the processor 120 may detect the control command from the voice data, by using a voice recognition model stored in the first device 100.

The processor 120 may perform a control operation corresponding to the control command. For example, when the detected control command includes a first operation code, the processor 120 may identify a first control operation corresponding to the first operation code from an operation table 134 of the first device 100, and may perform the first control operation.

The processor 120 may identify one of a security mode and a non-security mode as an operation mode of the first device 100, based on a certain condition. The certain condition may include, but is not limited to, user settings and a connection state between the first device 100 and the server device 300. When the operation mode of the first device is the security mode, the processor 120 may transmit the voice data to the server device 300 through the communicator 110. The security mode may be a mode in which the server device 300 performs authentication of the user, and the non-security mode may be a mode in which the first device 100 performs authentication of the user.

The processor 120 may switch the operation mode of the first device 100 from the security mode to the non-security mode, based on connection state information between the first device 100 and the server device 300. For example, when the connection state between the first device 100 and the server device 300 is unstable, the processor 120 may switch the operation mode of the first device 100 from the security mode to the non-security mode.

When the operation mode of the first device 100 is the non-security mode, the processor 120 may detect a first identification key from the packet and may perform authentication of the user based on the detected first identification key. For example, the processor 120 may compare the first identification key with a pre-stored second identification key, and when the first identification key and the second identification key are identical to each other, the processor 120 may determine that the authentication of the user succeeds.

When the authentication of the user based on the identification key succeeds, the processor 120 may detect a first operation code indicating a control command from the packet. The processor 120 may identify a first control operation corresponding to the first operation code from the operation table 134 of the first device 100, and may perform the first control operation.

The storage 130 may store a program for processing and controlling the processor 120, or may store input/output data (e.g., the packet, the voice data, and a user authentication result).

The storage 130 may include, for example, an internal memory or an external memory. The internal memory may include at least one of, for example, a volatile memory (e.g., a dynamic random-access memory (DRAM), a static RAM (SRAM), or a synchronous dynamic RAM (SDRAM)), and a nonvolatile memory (e.g., a one time programmable ROM (OTPROM), a programmable ROM (PROM), an erasable and programmable ROM (EPROM), an electrically erasable and programmable ROM (EEPROM), a mask ROM, a flash ROM, a flash memory (e.g.,. a NAND flash or a NOR flash), a hard drive, or a solid state drive (SSD)).

The external memory may include a flash drive such as compact flash (CF), secure digital (SD), micro-secure digital (Micro-SD), mini-secure digital (Mini-SD), extreme digital (xD), multi-media card (MMC), or memory stick. The external memory may be functionally and/or physically connected to the first device 100 through various interfaces. Also, the first device 100 may operate a web storage that performs a storage function of the storage 130 on the Internet.

According to an embodiment, the storage 130 may store, but is not limited to, a user authentication model 131, a voice recognition model 132, voice feature information 133 that is pre-registered in the first device 100 for authentication of the user, the operation table 134, and an identification key 135. The user authentication model 131 may be a learning model for authenticating the user, based on feature information of a voice that is pre-registered by the user. For example, the user authentication model 131 may be a model for authenticating the user based on voice pattern matching. The user authentication model 131 may detect first voice feature information from voice data by using linear predictive coefficient, cepstrum, mel-frequency cepstral coefficient (MFCC), or filter bank energy.

Also, the voice recognition model 132 may be a model for detecting (obtaining) a control command included in the voice data, by analyzing the voice data included in the packet. For example, the voice recognition model 132 may be a model for recognizing a voice of the user by using natural language processing.

The operation table 134 may be a table for mapping a control operation of the first device 100 and an operation code. The operation table 134 may be different for each device according to a function provided by the device.

The identification key 135 may be a security key shared through exchange, when the first device 100 and the second device 200 have been previously connected to each other. For example, the identification key 135 may include a second identification key.

Although not shown in FIG. 15, the first device 100 may further include an outputter, a camera, a microphone, a user inputter, and a sensing unit.

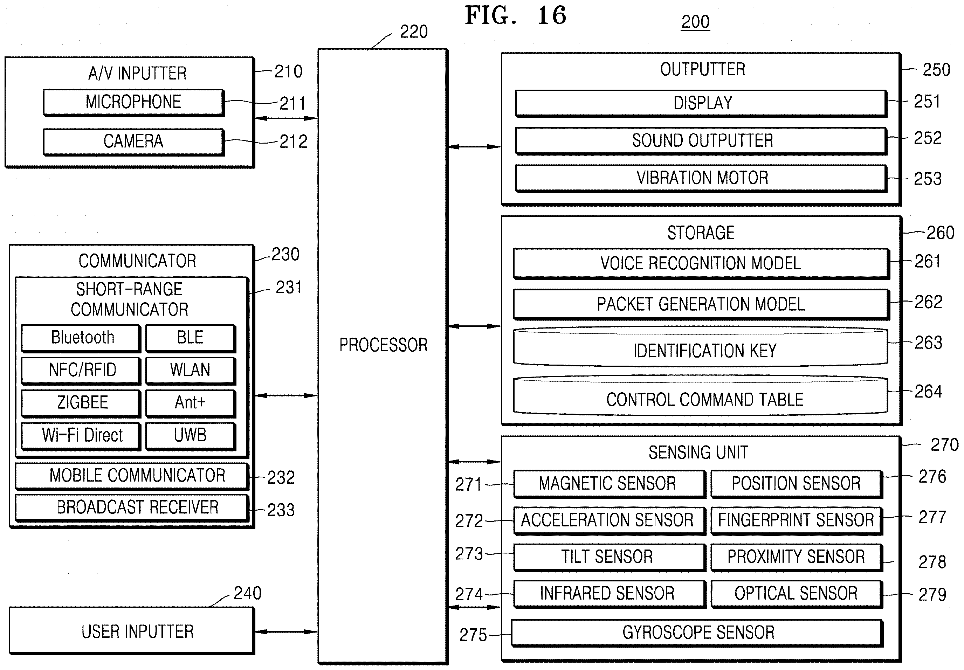

FIG. 16 is a block diagram for describing a configuration of a second device (command input device) according to an embodiment.

Referring to FIG. 16, the second device 200 may include an audio/video (A/V) inputter 210, the processor 220, the communicator 230, a user inputter 240, an outputter 250, a storage 260, and a sensing unit 270. However, not all elements illustrated in FIG. 16 are essential elements. The second device 200 may include more or fewer elements than those illustrated in FIG. 16. For example, the second device 200 may not include the outputter 250 or may not include the sensing unit 270, but the disclosure is not limited thereto.

However, the elements will now be sequentially described.

The A/V inputter 210 for inputting an audio signal or a video signal may include the microphone 211 and a camera 212.

The microphone 211 receives an external sound signal and processes the external sound signal into electrical voice data. For example, the microphone 211 may receive a sound signal from an external device or a speaker. The microphone 211 may use any of various noise removing algorithms to remove noise occurring when receiving the external sound signal. A voice command of a user received through the microphone 211 may be transmitted to the outside through the communicator 230.

The camera 212 may obtain image frames such as a still image or a moving image in a video call mode or an imaging mode. An image captured by the camera 212 may be processed by the processor 220 or an additional image processor (not shown).

The image frames processed by the camera 212 may be stored in the memory 260 or may be transmitted to the outside through the communicator 230. Two or more cameras 212 may be provided according to a configuration of the second device 200.

The processor 220 generally controls an overall operation of the second device 200. For example, the processor 220 may generally control the A/V inputter 210, the communicator 230, the user inputter 240, the outputter 250, the storage 260, and the sensing unit 270, by executing programs stored in the storage 260.

The processor 220 may generate a packet including voice data corresponding to a voice received through the microphone 211. According to an embodiment, the processor 220 may generate the packet according to a pre-defined data format. For example, referring to FIG. 4, the processor 220 may generate the packet including the first field 401 including a beacon type, the second field 402 including a packet number, the third field 403 indicating a voice length, and the fourth field 404 including the voice data. According to an embodiment, the processor 220 may generate the packet, by further including the fifth field 405 including an optional field flag, the sixth field 406 including an identification key, and the seventh field 407 including an operation (OP) code.

The processor 220 may obtain an operation code through an operation table and a voice recognition model 261. For example, the second device 200 may detect a control command from the voice data through the voice recognition model, and may obtain an operation code mapped to the detected control command from a control command table 264. The processor 220 may insert the obtained operation code into the seventh field 407.

According to another embodiment, the processor 220 may request the server device 300 for the operation code by transmitting the voice data to the server device 300. In this case, the server device 300 may detect the operation code from the voice data, based on the voice recognition model and the control command table. When the server device 300 transmits information about the operation code to the second device 200, the processor 220 may insert the received operation code into the seventh field 407.

According to an embodiment, the processor 220 may insert an identification key 263 shared between the first device 100 and the second device 200 into the sixth field 406. When additional information is included in the sixth field 406 or the seventh field 407, the processor 220 may set the optional field flag of the fifth field 405 as 'TRUE' and may cause the first device 100 to know whether the additional information (e.g., the identification key 263 and the operation code) is included.

According to an embodiment, when the user utters a personal authentication word, the processor 220 may separate data about the personal authentication word from the voice data and may insert the separated data into the packet, but the disclosure is not limited thereto.

The communicator 230 may include one or more elements for communication between the second device 200 and an external device or between the second device 200 and the server device 300. For example, the communicator 230 may include a short-range communicator 231, a mobile communicator 232, and a broadcast receiver 233.

Examples of the short-range communicator 231 may include, but are not limited to, a Bluetooth communicator, a Bluetooth low energy (BLE) communicator, a near-field communicator, a WLAN (Wi-Fi) communicator, a Zigbee communicator, an infrared data association (IrDA) communicator, a Wi-Fi direct (WFD) communicator, an ultra-wideband (UWB) communicator, and an Ant+ communicator. For example, the short-range communicator 231 may include a light fidelity (Li-Fi) communicator.

The mobile communicator 232 transmits/receives a wireless signal to/from at least one of a base station, an external terminal, and a server via a mobile communication network. Examples of the wireless signal may include a voice call signal, a video call signal, and any of various pieces of data according to text/multimedia message transmission/reception.

The broadcast receiver 233 receives a broadcast signal and/or broadcast-related information from the outside through a broadcast channel. Examples of the broadcast channel may include a satellite channel and a terrestrial channel. According to an embodiment, the second device 200 may not include the broadcast receiver 233.

According to an embodiment, the communicator 230 may broadcast a packet including voice data of a user. For example, the communicator 230 may broadcast the packet by using short-range communication. The communicator 230 may broadcast the packet once, or may repeatedly broadcast the packet in a certain cycle.

The user inputter 240 is a unit through which a user inputs data for controlling the second device 200. Examples of the user inputter 240 may include, but are not limited to, a keypad, a dome switch, a touchpad (e.g., a contact-type capacitance method, a pressure-type resistance film method, an infrared sensing method, a surface ultrasound transmission method, an integral tension measuring method, or a piezoelectric effect method), a jog wheel, and a jog switch.

The outputter 250 for outputting an audio signal, a video signal, or a vibration signal may include a display 251, a sound outputter 252, and a vibration motor 253.

The display 251 may display and output information processed by the second device 200. For example, the display 251 may display a plurality of objects recognized by the second device 200.

When the display 251 and a touchpad have a layer structure to form a touchscreen, the display 251 may be used as an input device as well as an output device. The display 251 may include at least one of a liquid crystal display, a thin-film transistor-liquid crystal display, an organic light-emitting diode, a flexible display, a three-dimensional (3D) display, and electrophoretic display. The second device 200 may include two or more displays 251 according to an implementation type of the second device 200. In this case, the two or more displays 251 may face each other by using a hinge.

The sound outputter 252 may output audio data received from the communicator 230 or stored in the storage 260. Also, the sound outputter 252 may output a sound signal (e.g., a call signal receiving sound, a message receiving sound, or a notification sound) related to a function performed by the second device 200. Examples of the sound outputter 252 may include, but are not limited to, a speaker and a buzzer.

The vibration motor 253 may output a vibration signal. For example, the vibration motor 253 may output a vibration signal corresponding to an output of audio data or video data (e.g., a call signal receiving sound, a message receiving sound, or a notification sound).

The storage 260 may store a program for processing and controlling the processor 220, or may store input/output data (e.g., a voice command and a packet).

The storage 260 may include, for example, an internal memory or an external memory. The internal memory may include at least one of, for example, a volatile memory (e.g., a dynamic random-access memory (DRAM), a static RAM (SRAM), or a synchronous dynamic RAM (SDRAM)), and a nonvolatile memory (e.g., a one time programmable ROM (OTPROM), a programmable ROM (PROM), an erasable and programmable ROM (EPROM), an electrically erasable and programmable ROM (EEPROM), a mask ROM, a flash ROM, a flash memory (e.g.,. a NAND flash or a NOR flash), a hard drive, or a solid state drive (SSD)).

The external memory may include a flash drive such as compact flash (CF), secure digital (SD), micro-secure digital (Micro-SD), mini-secure digital (Mini-SD), extreme digital (xD), multi-media card (MMC), or memory stick. The external memory may be functionally and/or physically connected to the second device 200 through various interfaces. Also, the second device 200 may operate a web storage that performs a storage function of the storage 260 on the Internet.

The storage 260 may store, but is not limited to, the voice recognition model 261, a packet generation model 262, the identification key 263, and the control command table 264.

The voice recognition model 261 may be a model for detecting (obtaining) a control command included in voice data, by analyzing the voice data included in a packet. For example, the voice recognition model 261 may be a model for recognizing a voice of the user by using natural language processing. The packet generation model 262 may be a model for generating a packet broadcast according to a pre-defined data format.

When the second device 200 has been previously connected to an external device, the identification key 263 may be a security key shared through exchange. For example, the identification key 263 may include an identification key shared between the second device 200 and the first device 100. The control command table 264 may be a table in which a control command and an operation code are mapped to each other. For example, a first control command ('cleaning mode') in the control command table 264 may be mapped to an operation code 1, and a second control command ('away mode') may be mapped to an operation code 2.

The sensing unit 270 may detect a state of the second device 200 or a state around the second device 200, and may transmit detected information to the processor 220.

The sensing unit 270 may include at least one of, but not limited to, a magnetic sensor 271, an acceleration sensor 272, a tilt sensor 273, an infrared sensor 274, a gyroscope sensor 275, a position sensor 276, a fingerprint sensor 277, a proximity sensor 278, and an optical sensor 279. Functions of the sensors would have been intuitively derived by one of ordinary skill in the art from their names, and thus a detailed explanation thereof will be omitted.

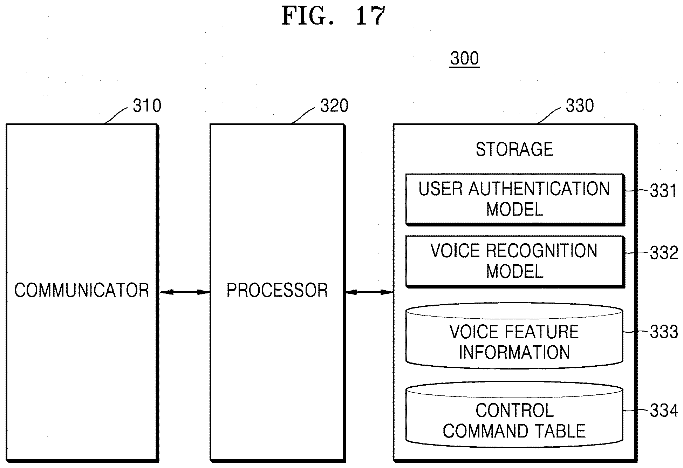

FIG. 17 is a block diagram for describing a configuration of a server device according to an embodiment.

Referring to FIG. 17, the server device 300 may include a communicator 310, a processor 320, and a storage 330. However, not all elements illustrated in FIG. 17 are essential elements. The server device 300 may include more or fewer elements than those illustrated in FIG. 17.

The elements will be sequentially described.

The communicator 310 may include one or more elements for communication between the server device 300 and the first device 100 or between the server device 300 and the second device 200.

For example, the communicator 310 may receive voice data from the first device 100 or the second device 200. The communicator 310 may transmit a result of user authentication and information about a control command (e.g., an operation code). Also, the communicator 310 may transmit information about the operation code obtained from the voice data to the second device 200.

The processor 320 may control an overall operation of the server device 300 by using a program or information stored in the storage 330. According to an embodiment, the processor 320 may perform authentication of a user, based on the received voice data. For example, the processor 320 may detect first voice feature information from the voice data received from the first device 100, and may compare the first voice feature information with pre-stored (or pre-registered) second voice feature information. The second voice feature information may be feature information detected from a voice pre-registered in the server device 300 for authentication of the user. According to an embodiment, the processor 320 may perform the authentication of the user, based on a comparison result between the first voice feature information and the second voice feature information. For example, when a similarity between the first voice feature information and the second voice feature information is equal to or greater than a threshold value (e.g., 99%), the processor 320 may determine that the authentication of the user succeeds. In contrast, when a similarity between the first voice feature information and the second voice feature information is less than the threshold value, the processor 320 may determine that the authentication of the user fails.

The processor 320 may detect an operation code indicating a control command, by analyzing the voice data. According to an embodiment, the processor 320 may detect the control command from the voice data, by analyzing the voice data by using natural language processing. According to an embodiment, the processor 320 may detect the operation code indicating the control command from the voice data. For example, when a command corresponding to 'scenario 1' is included in the voice data, the processor 320 may detect 'operation code: 1', and when a command corresponding to 'scenario 2' is included in the voice data, the processor 320 may detect 'operation code: 2', by using a control command table 334. The control command table 334 may be a table in which a control command and an operation code are mapped to each other.

The storage 330 may store a program for processing the processor 320, or may store input/output data. For example, the storage 330 may store, but is not limited to, a user authentication model 331, a voice recognition model 332, voice feature information 333 (e.g., second voice feature information), and the control command table 334.

A method according to an embodiment may be embodied as program commands executable by various computer means and may be recorded on a computer-readable recording medium. The computer-readable recording medium may include program commands, data files, data structures, and the like separately or in combinations. The program commands to be recorded on the computer-readable recording medium may be specially designed and configured for the disclosure or may be well-known to and be usable by one of ordinary skill in the art of computer software. Examples of the computer-readable recording medium include a magnetic medium such as a hard disk, a floppy disk, or a magnetic tape, an optical medium such as a compact disk read-only memory (CD-ROM) or a digital versatile disk (DVD), a magneto-optical medium such as a floptical disk, and a hardware device specially configured to store and execute program commands such as a ROM, a RAM, or a flash memory. Examples of the program commands are advanced language codes that may be executed by a computer by using an interpreter or the like as well as machine language codes made by a compiler.

Some embodiments of the disclosure may be implemented as a recording medium including computer-executable instructions such as a program module executed by a computer. A computer-readable medium may be an arbitrary available medium accessible by a computer, and examples of the computer-readable medium include all volatile and non-volatile media and separable and non-separable media. Further, examples of the computer-readable medium may include a computer storage medium and a communication medium. Examples of the computer storage medium include all volatile and non-volatile media and separable and non-separable media, which are implemented by an arbitrary method or technology, for storing information such as computer-readable instructions, data structures, program modules, or other data. The communication medium typically includes computer-readable instructions, a data structure, a program module, other data of a modulated data signal, or another transmission mechanism, and an example of the communication medium includes an arbitrary information transmission medium. Also, some embodiments may be implemented as a computer program or a computer program product including instructions executable by a computer such as a computer program executed by a computer.

While the disclosure has been particularly shown and described with reference to embodiments thereof, it will be understood by one of ordinary skill in the art that various changes in form and details may be made therein without departing from the spirit and scope of the disclosure as defined by the appended claims.

## Claims

1. A method, performed by a first device, of performing a voice command, the method comprising:
receiving a packet comprising voice data of a user broadcast from a second device;
performing authentication of the user, by using the voice data included in the packet;
detecting a control command from the voice data, when the authentication of the user succeeds; and
performing a control operation corresponding to the control command.

2. The method of claim 1, wherein the performing of the authentication of the user comprises:
detecting first voice feature information from the voice data;
comparing the first voice feature information with pre-stored second voice feature information; and
performing the authentication of the user, based on a comparison result.

3. The method of claim 2, wherein the performing of the authentication of the user further comprises:
detecting an identification key from the packet, when the first device fails to detect the first voice feature information from the voice data; and
performing the authentication of the user, based on the detected identification key.

4. The method of claim 2, wherein the detecting of the first voice feature information comprises:
identifying a personal authentication word from the voice data; and
detecting the first voice feature information from the identified personal authentication word.

5. The method of claim 1, wherein the detecting of the control command from the voice data comprises detecting the control command from the voice data, by using a voice recognition model stored in the first device.

6. The method of claim 1, wherein the performing of the control operation comprises:
when the detected control command comprises a first operation code, identifying a first control operation corresponding to the first operation code, from an operation table of the first device; and
performing the first control operation.

7. The method of claim 1, wherein the detecting of the control command from the voice data comprises:
transmitting the voice data to a server device; and
receiving, from the server device, information about the control command detected by the server device by analyzing the voice data.

8. The method of claim 7, wherein the transmitting the voice data to the server device comprises transmitting the voice data to the server device, when the first device fails to detect the control command by using a pre-stored voice recognition model.

9. A first device for performing a voice command, the first device comprising:
a communicator configured to receive a packet comprising voice data of a user broadcast from a second device; and
a processor configured to perform authentication of the user by using the voice data included in the packet, detect a control command from the voice data when the authentication of the user succeeds, and perform a control operation corresponding to the control command.

10. A computer program product comprising a computer-readable storage medium, the computer-readable storage medium comprising instructions to
receive a packet comprising voice data of a user broadcast from the outside;
perform authentication of the user, by using the voice data included in the packet;
detect a control command from the voice data, when the authentication of the user succeeds; and
perform a control operation corresponding to the control command.

11. A method, performed by a first device, of performing a voice command, the method comprising:
receiving a packet comprising voice data of a user broadcast from a second device;
transmitting the voice data to a server device;
receiving, from the server device, a result of authentication of the user based on the voice data and information about a control command detected from the voice data; and
performing a control operation corresponding to the control command, when the authentication of the user succeeds.

12. The method of claim 11, wherein the performing of the control operation comprises, when the information about the control command comprises a first operation code indicating the control command, identifying, from an operation table of the first device, a first control operation corresponding to the first operation code.

13. The method of claim 11, wherein the transmitting the voice data to the server device comprises:
identifying one of a security mode and a non-security mode as an operation mode of the first device, based on a certain condition; and
transmitting the voice data to the server device, when the operation mode of the first device is the security mode,
wherein the security mode is a mode in which the server device performs the authentication of the user, and the non-security mode is a mode in which the first device performs the authentication of the user.

14. The method of claim 13, further comprising switching the operation mode of the first device from the security mode to the non-security mode, based on information on a connection state between the first device and the server device.

15. A first device for performing a voice command, the first device comprising:
a first communicator configured to receive a packet comprising voice data of a user broadcast from a second device;
a second communicator configured to transmit the voice data to a server device and receive, from the server device, a result of authentication of the user based on the voice data, and information about a control command detected from the voice data; and
a processor configured to perform a control operation corresponding to the control command, when the authentication of the user succeeds.
